(19) Europäisches Patentamt
European Patent Office
Office européen des brevets

(11) **EP 1 223 745 B1**

(12) **EUROPEAN PATENT SPECIFICATION**

(45) Date of publication and mention
of the grant of the patent:
**18.10.2006 Bulletin 2006/42**

(51) Int Cl.:
***G06T 5/40*** (2006.01)    ***H04N 1/60*** (2006.01)

(21) Application number: **01129142.4**

(22) Date of filing: **07.12.2001**

(54) **System and method for processing image data, computer program for performing the method and data storage medium carrying the program**

System und Verfahren zur Bilddatenverarbeitung, Rechnerprogramm zur Durchführung des Verfahrens und Datenträger zur Speicherung des Programms

Système et procédé de traitement de données d'images, programme informatique et support de stockage pour le programme

(84) Designated Contracting States:
**AT BE CH CY DE DK ES FI FR GB GR IE IT LI LU MC NL PT SE TR**

(30) Priority: **05.01.2001 JP 2001000671**
**06.02.2001 JP 2001029749**

(43) Date of publication of application:
**17.07.2002 Bulletin 2002/29**

(73) Proprietor: **SEIKO EPSON CORPORATION**
**Shinjuku-ku,**
**Tokyo 163-0811 (JP)**

(72) Inventors:
• **Kitahara, Katsuhiko**
**Suwa-shi,**
**Nagano-ken 392-8502 (JP)**
• **Yokoyama, Kazuyuki**
**Suwa-shi,**
**Nagano-ken 392-8502 (JP)**
• **Horiuchi, Yukiharu**
**Suwa-shi,**
**Nagano-ken 392-8502 (JP)**

(74) Representative: **Hoffmann, Eckart**
**Patentanwalt,**
**Bahnhofstrasse 103**
**82166 Gräfelfing (DE)**

(56) References cited:
**US-A- 4 873 570**        **US-A- 5 467 196**
**US-B1- 6 206 504**

• **PATENT ABSTRACTS OF JAPAN vol. 1998, no. 06, 30 April 1998 (1998-04-30) & JP 10 051770 A (N T T DATA TSUSHIN KK), 20 February 1998 (1998-02-20)**
• **PATENT ABSTRACTS OF JAPAN vol. 1999, no. 08, 30 June 1999 (1999-06-30) & JP 11 070780 A (MATSUSHITA ELECTRIC IND CO LTD), 16 March 1999 (1999-03-16) -& US 6 188 493 B1 13 February 2001 (2001-02-13)**

**Description**

The present invention relates generally to a system for and method of processing image data for an output device such as a printer or display device, wherein colors in a source image are assigned to a limited number of colors available in the printer or display device (called the printable colors in this text) in order to print or display full-color or other multicolor image data using fewer colors than are in the source image. This invention relates more specifically to such system and method suitable for a color printer capable of printing only a limited number of colors. This type of printer is referred to herein as a "limited-color printer."

By using 256 levels each for red, green, and blue, modern graphics applications can express more than 16 million colors in a full-color image. Full-color printers capable of printing these images are now commonly available. While printers used in business have primarily been monochrome (black and white) printers because of their greater speed and economy, color printers are now also beginning to be used in business settings.

While full-color printers make it possible to use a palette of diverse colors for greater expressiveness and variety, the drawback is that the more colors are printed the longer it takes and the higher are the operating costs. This is a particular problem with printers used in business settings where high-speed printing is essential. Balancing the desire for the expressiveness that is possible with color printing with the need for fast printing and economical operation is particularly important with printers used for specialized applications such as POS terminals where there is a 1:1 relationship between a customer and the printing operation, printer output is handed directly to the customer on the spot, and high speed printing is therefore essential. Two-color printers, that is, printers limited to printing two colors, are therefore beginning to be used for such specialized printing applications. Applications for this type of printer currently include POS printers such as used in the retail industry, ATM printers used in banks, printers for printing tickets for parking lots and customer service numbers, and printers used in kiosk terminals in convenience stores, for example. The primary object of such printers is to print text. Text data is typically printed in black, and the two-color color printers used in such applications are typically capable of printing black and one other color (normally red, green, or blue). The printer could, however, print two colors not including black, and the printer could be a three-color printer capable of printing two colors in addition to black.

In order to print a full-color image on this type of limited-color printer, the data representing the full-color image must be reduced, through a process known as color reduction, to the colors that can be printed by the printer. In addition to enabling printing full-color images on a limited-color printer, color reduction of the image data is also used to, for example, print an image using just the available remaining colors when a particular color of ink runs out.

The data that represent the source image to which such color reduction is applied and for which colors are assigned (color assignment) is referred to herein as the "source data."

Methods for reducing the colors in a full-color or other multicolor image include simple color reduction, dithering, and error diffusion. Dithering and error diffusion introduce a fine noise pattern as a result of the color reduction process. When an image with such noise spots is then printed with only a few colors, the spots become obvious and conspicuous. It is particularly important for logos printed on a receipt by a POS printer to be clearly defined so that the printed image is easily recognizable. The contours and shape of the logo must therefore be clearly expressed even when printed with a small palette of colors. Some logos are designed with a complicated blend of colors and color brightness (appearing as a difference in luminance (brightness) during image data processing).

Simple color reduction techniques simply digitize RGB color depth referenced to a defined median value, thus emphasizing the color difference and not clearly reflecting the difference in brightness. The result is that when logos with complicated coloring and subtle brightness (luminance) differences are reduced with simple color reduction, the loss of luminance difference information results in the printed logo differing greatly from the original logo.

Furthermore, when a logo for a particular printing purpose, such as a customer service notice, product advertisement, or coupon, is printed using only a few colors, it is desirable to be able to select among a variety of image processes in order to create the best possible print image.

US-A-4,873,570 discloses a system for processing image data for printout by a printer comprising: a source data capturing unit for obtaining source data containing a representation of an image, a graphic and/or a text in plural colors; a data converter for converting color data for each pixel in the source data to luminance data for the respective pixel said luminance data representing one of a plurality of luminance levels; and a color assignment unit for assigning one of N printable colors that are available in said output device to each pixel. In this prior art the same color is assigned to all pixels irrespective of their luminance level so as to obtain a monochrome image. The luminance values are reflected in the gradation of the monochrome image such that different colors in the original are replaced by different gradations of one and the same assigned color.

A method according to the pre-characterizing portion of claim 12 is known from *"Post Office Site" http:// www.jushuatreevillage.com/228/po.htm* (*1999-08-19*). This documents describes a particular use of the program *Photoshop* by Adobe System Inc. to reduce the number of primary colors in a source image by first first converting the colors of the source image to grey scale values and subsequently assigning colors to the grey scale values.

It is an object of this invention is to provide a system and a method enabling a source image to be printed accurately and clearly with a limited number of printable primary colors when specific shapes are defined in the source image by luminance difference information.

These objects are achieved by a system and method as claimed in claims 1 and 12, respectively. Preferred embodiments of the invention are subject-matter of the dependent claims.

The invention as claimed allows producing print data that accurately reflect the brightness of the source image by using the luminance levels near the transition points as the threshold values for reducing the number of luminance levels.

The embodiment according to claims 2 and 13 allows compensating for any offset between color depth and luminance, and makes it possible to calculate an accurate luminance value for each pixel unit.

The embodiment according to claims 3 and 14 allows correcting the luminance levels according the relative luminance characteristics of the component colors (RGB).

The smoothing in the embodiment according to claims 4 and 16 removes small fluctuations in the luminance distribution, reflects large changes in the luminance in the luminance distribution, and thus allows to detect more appropriate threshold values.

The embodiment according to claims 5 and 15 prevent using minimums forming the bottom of small valleys as threshold values, and thus allows more accurately reflecting luminance differences in the print data. This technique also allows avoiding minimums forming small, narrow and/or shallow, valleys from being used as threshold values, and thus allows more accurately reflecting luminance differences in the print data.

The embodiment according to claims 6 and 17 makes it possible to accurately express large changes in image luminance, and makes it easier to assign colors using a further 2-value or 3-value conversion.

The embodiment according to claims 8 and 19 enables the user to freely assign print colors to the pixels. The user may want to change the color assignment as a result of deciding the final color assignment based on the visual result of the color assignment setting. This aspect of the invention is particularly useful when it is desirable to enable the user to determine specific color assignments.

This invention is not limited to the use with printers capable of printing only a limited number of colors, but is particularly effective for creating images for printing with only specific colors.

Other objects and attainments together with a fuller understanding of the invention will become apparent and appreciated by referring to the following description of preferred embodiments taken in conjunction with the accompanying drawings, in which:

Fig. 1        is a function block diagram of a system according to an embodiment of the present invention;

Fig. 2        is a table showing the relationship between color depth and luminance for white (W), yellow (Y), cyan (C), green (G), magenta (M), red (R), blue (B), and black (K);

Fig. 3        is a function block diagram of an example of the gray level processor according in Fig. 1;

Fig. 4        is a graph showing an example of a luminance distribution curve of source data and a smoothed luminance distribution curve;

Fig. 5        is a function block diagram of an example of the color assignment unit in Fig. 1;

Fig. 6        is a graph showing luminance data converted to 8 levels based on threshold values 1 to 7 set by the gray level processor;

Fig. 7        is a graph showing an example of setting threshold values for two-level or three-level conversion by dividing 256 levels evenly into two or three groups;

Fig. 8        is a flow chart of a method according to an embodiment of the present invention;

Fig. 9        is a flow chart of an example of the process in step S100 in Fig. 8;

Fig. 10       is a flow chart of an example of the process in step S200 in Fig. 8;

Fig. 11       is a flow chart of an example of the process in step S204 in Fig. 10;

Fig. 12       is a flow chart of an example of the process in step S300 in Fig. 8;

Fig. 13       is a flow chart of an example of the process in step S303 in Fig. 12;

Fig. 14       shows various level conversion processes with (a) showing an RGB gradation cube, and (b) to (e) being monochrome representations of that cube developed onto a plane;

Fig. 15       shows the results of processing the gradation image (a), in which black density increases downward as a gradient from the top left and red density increases as a gradient from top left to right, by dithering (b), by error diffusion (c), and by the method of the present invention (d), (e), and (f), where each of the images was printed using two colors, black and red;

Fig. 16       shows an exemplary processing screen in an image data processing system according to the present invention;

Fig. 17       shows various images illustrating the difference between processing by means of the present invention, dithering, and error diffusion;

Fig. 18(a)       shows the relationship between the color assignment slider 81 shown in Fig. 12 and fifteen colors that can be expressed by a printer that can print two colors (three colors including a non-printing color) per dot where each pixel consists of four dots, and (b) shows a sample dialog box for assigning eight luminance levels to fifteen printable colors;

Fig. 19       shows the basic configuration of an OPOS system; and

Fig. 20       shows an exemplary dialog box displayed on a personal computer, for example, for setting image data processing parameters.

Main applications and need for the invention: growing use of printing color images with limited colors

The present invention is particularly useful for processing image data to be printed on a limited-color printer used in specialized business applications. It is to be noted that the term image data as used in this text covers all kind of data including text data that may be printed by a printer or displayed by a display device. The invention is described below with reference to a printer used in a POS system (referred to below as a POS printer) as an example of this type of limited-color printer for such specialized business applications. POS systems register the products purchased by a customer as sales data on a POS server, and print sales data such as the purchased items and price information by means of a POS printer on paper as a receipt. The receipt is then handed directly to the customer. In addition to the sales data, the store's logo, product advertisements, announcements, and other information may be printed on the receipt. The POS system can also use the POS printer to print coupons, free product offers, and other sales promotions. Logos, advertisements, notices, coupons, and other such information printed on the receipt have an effect on the store's image and effectiveness of the offer. Good logo design enabling easy brand recognition is therefore desirable.

Printing normally requires that the print data be sent from a host device to the printer. This means that in order to address both the need for immediate printing (high speed printing) in direct customer transaction situations, and the need or desirability of color printing, both economy and high speed communication must be considered. To reduce data communication traffic and enable faster throughput in logo printing, a particular print image is stored as logo data in the printer so that the logo data can be printed by simply sending a specific command telling the printer to print the logo from memory. Greater expressiveness of the printed image, the need for high speed printing, and economy can also be balanced by printing with a limited number of colors as described above. Color logo data is therefore stored (registered) in the printer after first processing the source data by color reduction according to the capabilities of the limited-color printer.

As will be clear from the above, logo data is typical of the print data generated by the system and method of the present invention. It will also be noted that a logo generally refers to data such as a store logo printed by a POS printer. As used herein, however, a logo refers to all data stored in a printer and printed in response to a logo print command, and specifically includes image data for product advertisements, image data for announcements and notices, image data for coupons, and image data for discount tickets.

Furthermore, while a POS printer is described as a typical example of a limited-color printer, such printers can also be for printing applications other than POS printing. Printers with limited-color printing capabilities can, for example, be used for bank ATM printers, customer service (queuing) number printers, and parking lot ticket printers to similarly print logos, advertisements, and announcements. Such applications have the same need for immediate printing as POS printers, and limited-color printers are therefore expected to gain a growing share of the business printer market.

This invention is effective for creating reduced-color images for printing on limited-color printers such as described above. The invention is not limited to the use with such limited-color printers, however, and can be used with full-color printers to, for example, intentionally reduce a full-color image to a specific number of print colors in order to emphasize a particular color or image element.

The most typical field in which the invention is expected to be particularly useful, however, is the field of business printers such as POS printers and ATM printers. When describing a specific printing situation, the following description of the invention therefore imagines printing by a limited-color printer such as described above, and even more particularly by a POS printer.

Overview of printing images with a printer

A printer prints by receiving the print data and print commands from another device. This is essentially true for POS printers in that they receive print data for each print job. Image data, however, is relatively large and therefore takes longer to transmit, and printing therefore becomes slower. POS printers therefore store (register) frequently printed image data as logo data in non-volatile memory within the printer, and print the logo data from memory when a particular logo data print command is received.

The image print data to be printed in this manner must be expressed in the printable colors, that is, the colors the printer is capable of printing. Source data expressed by the intensities of the three primary colors RGB (red, green, and blue), is generally converted to print data expressed by the intensities of CMYK (cyan, magenta, yellow, black) for printing on a full-color printer. If the printer can only print red and black (RK data), then the full-color RGB data must be reduced to RK data for printing. The source data is most commonly RGB color data and the invention is therefore described below with reference only to processing of RGB color data. It will be appreciated, however, that if the source data is CMYK color data, CMYK-RGB conversion techniques such as known in the prior art can be used to convert the source data to RGB source data.

A typical procedure for printing a logo stored as image data inside a POS printer starts when the printer receives a print logo command. The printer then reads the logo data specified by the received print logo command from its memory, converts the stored logo data to bitmap image data, stores the bitmap image data in a print buffer and finally prints the bitmap image data from the print buffer. Separate bitmap image data are generated for each printable color (except for what is defined as non-printing color later in this text) at this time. Each dot in the bitmap for a respective color is stored as one bit. The data for the individual dots (bits) in each bitmap stored in the print buffer for each printable color are then sent in a specific sequence to the print mechanism as controlled by the print controller. The print mechanism has a respective print head for each printable color, and each print head prints a specific color and is controlled according to the bitmap of the corresponding printable color. The resulting printer output is a logo printed with a specific number of colors.

This invention creates the print data to be stored as logo data in the printer and printed in this manner, and further description of the printing operation itself is omitted below.

Preferred embodiment of an image data processing system

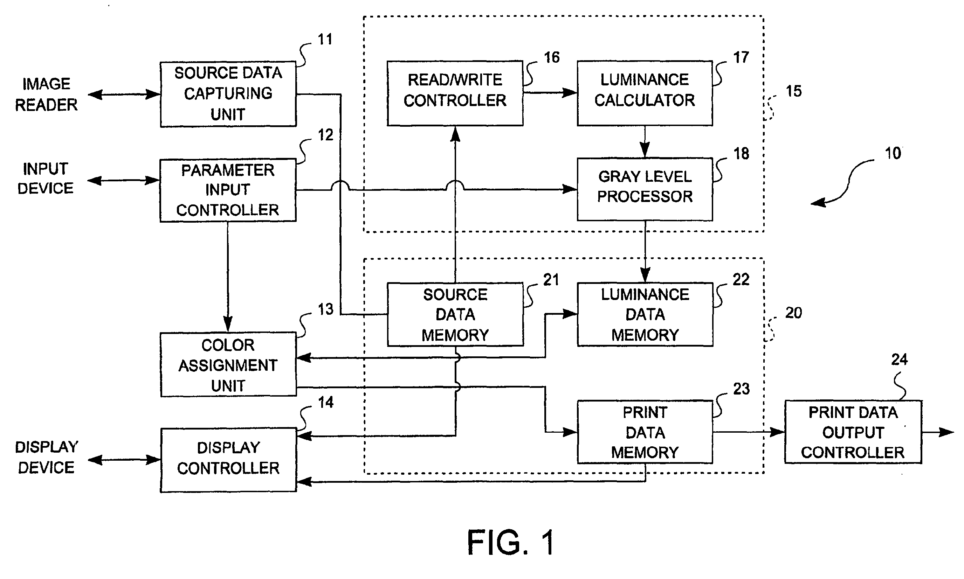

Fig. 1 is a function block diagram of a system 10 according to a preferred embodiment of the present invention. As shown in Fig. 1, the system 10 has a source data capturing unit 11, a parameter input controller 12, a color assignment unit 13, a display controller 14, a data converter 15, a memory unit 20, and a print data output controller 24. The data converter 15 has a read/write controller 16, a luminance calculator 17, and a gray level processor 18. The memory unit 20 includes a source data memory 21, a luminance data memory 22, and a print data memory 23.

The source data capturing unit 11 is a file reading controller, scanner, or similar device for capturing as source data full-color image or other image data from which the print data is to be generated; this capturing may be by scanning an image or reading an image stored on an external disk, a CD-ROM, a memory card, or other storage device or medium. The source data is then stored in the source data memory 21 in memory unit 20 as color data (RGB color data or CMYK color data). The source data in source data memory 21 is read pixel by pixel by the read/write controller 16 of data converter 15, and is transferred to the luminance calculator 17. As further described below, the luminance calculator 17 calculates (that is, converts from a color value to a luminance value) a single luminance value for the plural color values defining each pixel, and stores the result. Thus, the source data (color data) in which each pixel is defined by RGB (or CMYK) color intensity values is converted to luminance data in which each pixel is defined by one of a plurality of luminance levels (which may be called gray levels). The luminance data stored for each pixel is further converted by the gray level processor 18 to luminance data with even fewer levels. The gray level processor 18 is further described below. The luminance data reduced to fewer levels by the gray level processor 18 is stored in the luminance data memory 22 in memory unit 20.

The luminance data obtained in this manner and then further stored in the memory unit 20 is read by the color assignment unit 13, which then assigns a specific color to each pixel according to the luminance levels. Operation of the color assignment unit 13 is also described in more detail below. The source data to which colors have been assigned by the color assignment unit 13 is then stored as print data in the print data memory 23. The print data stored in the print data memory 23 is output by the print data output controller 24 as a logo data file or as print data to the printer, for example, or to another converter or processor (not shown in the figure) for conversion from RGB color data to CMYK color data, for example.

The parameter input controller 12 enables inputting data for setting the parameters and conditions (referred to below as the parameter data) of certain processing operations, including the threshold values used by the gray level processor 18 for reducing the number of luminance levels of the luminance data to a smaller number of luminance levels, and those used for the color assignments of the color assignment unit 13; controller 12 also passes the input parameter data to the gray level processor 18 or color assignment unit 13.

The display controller 14 controls displaying the data obtained by the source data capturing unit 11 and the print data stored in the print data memory 23 after image data processing on the display unit. The image data processing parameters can be changed to create the best print data while viewing on the display unit both, the source data and the print data resulting from the current parameter settings.

Converting color data to luminance data

Calculating the luminance data is described next. Luminance calculator 17 calculates the luminance of each pixel from the RGB color data. Color image data is commonly expressed as the intensities of the three primary colors, i.e., red, green, and blue, per pixel with each color intensity ranging from 0 to 255 (256 levels). In other words, the color depth of the color image data is 24 bit in this embodiment, and each pixel can therefore be logically defined as one of more than 16 million colors (256 x 256 x 256 = 16,777,216) in a full-color image. The relationship between these color intensities and the luminance differs depending on the color ratio (R:G:B). The luminance Yc of each pixel is calculated using the following equation to convert RGB color data to luminance data.

$$Yc = 0.299R + 0.587G + 0.114B \qquad\qquad (1)$$

If the source data is full-color image data, that is, if the RGB color intensity is 0 to 255 for each color, conversion to 256 luminance levels (0 to 255) is possible using the equation

$$Yc_{256} = INT((0.299R/256 + 0.587G/256 + 0.114B/256) \times 256) \qquad\qquad (2)$$

where INT(x) denotes a function converting x to an integer number; conversion to 8 levels (0 to 7) is possible using the equation

$$Yc_8 = INT((0.299R/256 + 0.587G/256 + 0.114B/256) \times 8) \qquad\qquad (3)$$

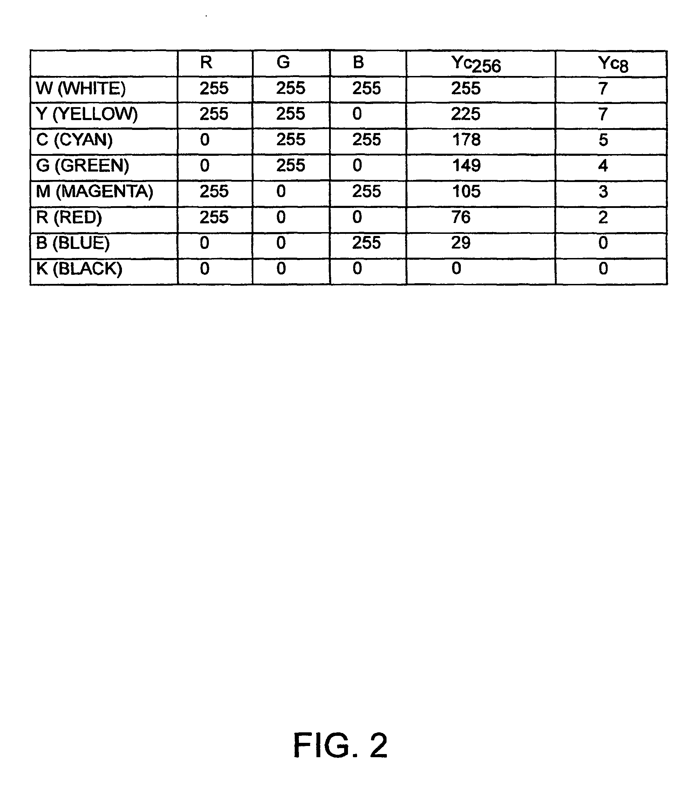

Fig. 2 shows the relationship between color depth and luminance for the typical ink colors white (W), yellow (Y), cyan (C), green (G), magenta (M), red (R), blue (B), and black (K). RGB color intensities and luminance (both $Yc_{256}$ (256 levels from 0 to 255), and $Yc_8$ (8 levels from 0 to 7) are shown for each of the colors W, Y, C, G, M, R, B, K.

It should be noted that if the source data is CMYK color data, it can first be converted to RGB data and then converted to luminance data in the way explained herein. It is also possible, however, to directly convert CMYK color data to luminance data as will be readily appreciated by those skilled in the art based on the teachings given in this text. This may be achieved, for instance, by substituting in equation (2) or (3) 255-C for R, 255-M for G and 255-Y for B.

Reducing luminance data to fewer luminance levels

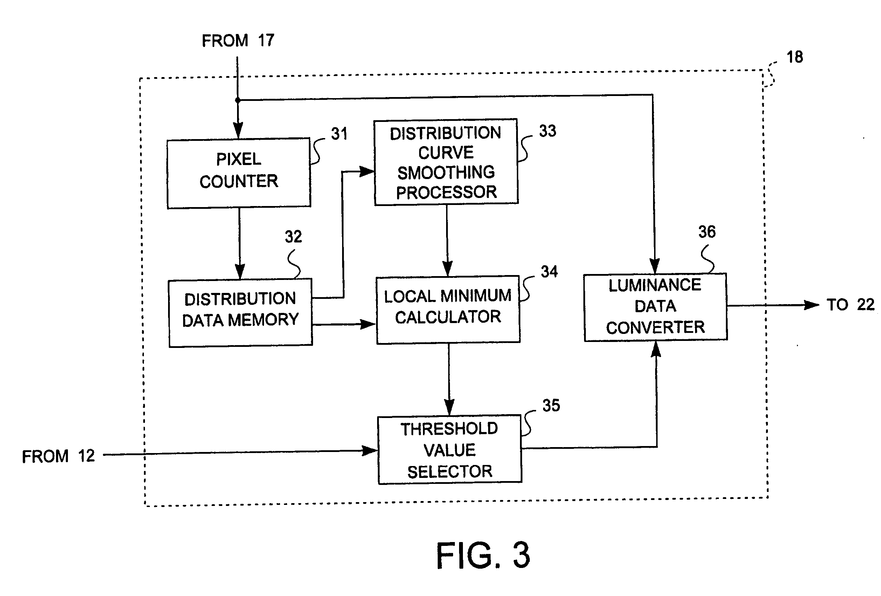

A conversion process whereby the gray level processor 18 reduces the number of luminance levels is described next with reference to Fig. 3.

Fig. 3 is a function block diagram of a gray level processor 18 according to a preferred embodiment of the invention. It is assumed here that the luminance calculator 17 has converted RGB color data to 256-level luminance data. Because the source data image is expressed using 256 levels of luminance data, the number of luminance levels is preferably further reduced to facilitate color assignment. The gray level processor 18 therefore reduces this 256-level luminance data to fewer levels, specifically 8 levels in this example.

It will be noted that this step of further reducing the number of luminance levels is not required if, for example, the luminance calculator 17 has already reduced the source data image to 8 luminance levels by applying the above equation (3). However, if the luminance calculator 17 initially reduces the image to 8 luminance levels, the image is reduced to eight levels using simple division, and it is difficult to achieve the subtle gradients that better match the luminance distribution, that is, the number of pixels per luminance level in the source image. However, if the image is first converted with high luminance resolution and is then reduced to a lower resolution, the final gradations will better represent the luminance distribution of the source image. If the source image is first converted to luminance data using fine gradations (such as 256 levels), for example, the luminance distribution can be determined with high resolution. The luminance data can then be reduced to fewer (low resolution) gradations based on threshold values determined depending on the luminance distribution. By thus converting a full-color image to a low resolution gray scale image, the actual luminance distribution of the source image can be better reflected in the color assignments of the print data.

The gray level processor 18 shown in Fig. 3 sequentially counts the number of pixels in each luminance level, compares each pixel count with those at luminance levels before and after the respective pixel count to detect one or more minimums in the luminance distribution curve, and uses these minimums as the threshold values for color assignment. To achieve this, the gray level processor 18 tabulates the pixel count for each luminance level in the image, i.e., calculates the luminance distribution, and detects the minimums used as the threshold value from the distribution curve.

This process could be skipped and the threshold values determined by evenly dividing the luminance levels obtained from the luminance calculator 17, and the image then converted to a low resolution gray scale image using these threshold values, but the threshold values obtained by such even division will not accurately reflect the change in luminance that is characteristic of the source data, and the pattern of the resulting print image may be completely different from the source image. It is therefore desirable to determine the threshold values characteristic of the image by first analyzing the luminance distribution of the source image. The gray level processor 18 is further described below.

Calculating the luminance distribution by counting the pixels in each luminance level

As shown in Fig. 3, the gray level processor 18 has a pixel counter 31, a distribution data memory 32, a distribution smoothing processor 33, a minimum calculator 34, a threshold value selector 35, and a luminance data converter 36.

The pixel counter 31 reads luminance data received from luminance calculator 17, and counts for each luminance level the respective number of pixels. The resulting luminance distribution is then stored in the distribution data memory 32.

Distribution smoothing process

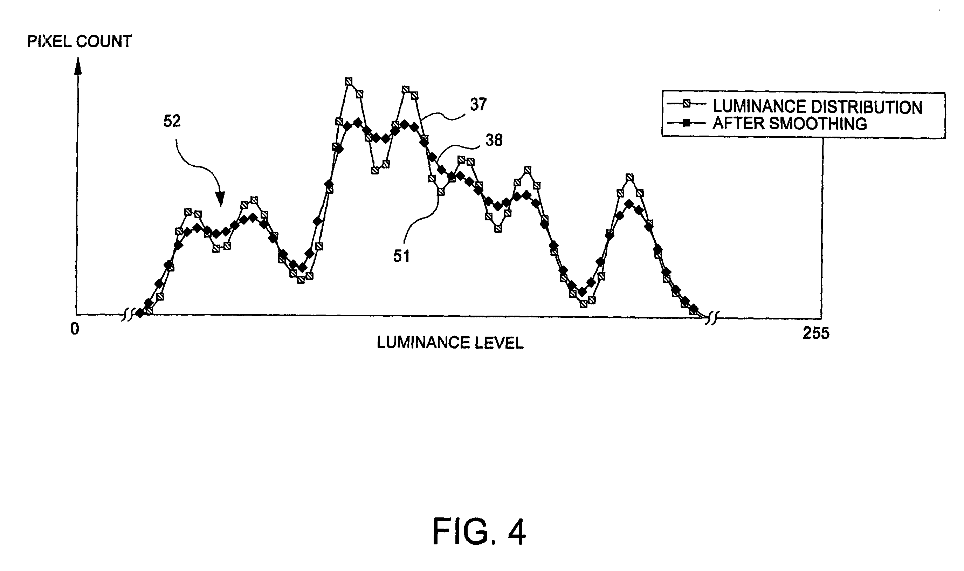

Fig. 4 is a graph showing the luminance distribution stored in distribution data memory 32. Note that Fig. 4 shows a section of the 0 to 255 luminance levels enlarged in order to simplify this description of the smoothing process. The luminance distribution is shown as a curve 37, i.e., a graph connecting the pixel count values plotted on the ordinate against the 256 luminance levels (levels 0 to 255) on the abscissa. High resolution conversion of color to luminance data produces a luminance distribution curve 37 having some fine minimums 51 distributed along the curve. The luminance levels at these fine minimums are unsuitable for use as threshold values for reducing the number of luminance levels, and are therefore preferably removed.

These fine minimums are removed by the distribution smoothing processor 33. The distribution smoothing processor 33 smoothes the luminance distribution curve 37 by, for example, calculating for each luminance level the average of the pixel count values at m (where m = 7, for example) luminance levels, the respective luminance level itself and (m-1)/2 levels before and after this respective luminance level in the luminance distribution curve 37, and then using the resulting average as the pixel count for the respective luminance level. As shown in Fig. 4, the fine minimum 51 in the luminance distribution curve 37 before smoothing does no longer appear in the distribution curve 38 after smoothing, and it is therefore easier to find the best threshold values.

Detecting the minimums

The minimum calculator 34 detects the minimums in the smoothed luminance distribution. minimums can be detected by, for example, finding a point at which the pixel count decreases through k (where k = 5, for example) consecutive luminance levels and then increases through the next j (where j = 5, for example) consecutive luminance levels. It should be noted that applying this condition makes it possible to avoid using values, such as minimum 52, in the smoothed distribution curve that are unsuitable for determining the threshold values. It should be noted that various

EP 1 223 745 B1

other methods that will be apparent to one with ordinary skill in the art can be used instead for minimum detection.

Determining the threshold values

The threshold values are then set using the luminance level(s) of the detected minimum(s). The luminance levels of the minimums can be used directly, or a specific compensation process can be applied to these luminance levels to determine the threshold values. The number of luminance levels resulting from the low resolution conversion process can be fixed or can be input via the parameter input controller 12 (Fig. 1). If the number of minimums is less than the desired number of luminance levels, the data is converted to the specified number of levels using a predetermined algorithm. For example, the luminance level dividing the greatest range between two adjacent minimums into two could be used as another threshold value and this principle can be applied iteratively until the desired number of threshold levels is obtained. Operation could also be configured so that rather than applying the image analysis using the luminance distribution as described above, parameters externally input using the parameter input controller 12 could be used to determine the threshold values for low resolution conversion. The most desirable threshold values as determined by a more comprehensive analysis of the luminance data could also be set by the user while observing the distribution curve and the results of the selected threshold values.

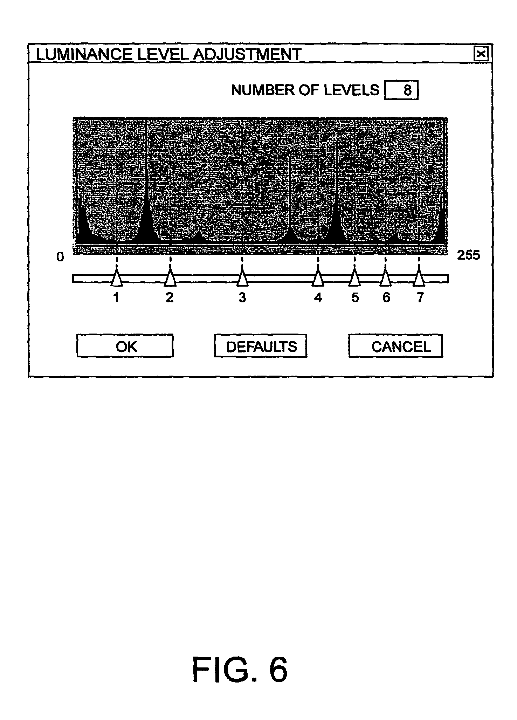

Fig. 6 is a graph showing an example of reducing the luminance data to eight levels based on seven threshold values 1 to 7 determined by the gray level processor 18. The threshold values 1 to 7 are set in the valleys (exactly: the bottom of the valleys, i.e., the minimums) of the luminance distribution curve in Fig. 6. If there is a sharp valley at one or both ends of the distribution curve (the exemplary distribution curve shown in Fig. 6 has one on the left end), the corresponding luminance level(s) may be ignored as threshold value(s).

Conversion process for luminance level reduction

For each pixel the luminance data converter 36 reads the luminance data from the luminance calculator 17, and assigns one of, for example, eight luminance levels to the respective pixel based on the luminance level represented by the read luminance data and the defined threshold values. Luminance data representing the thus assigned luminance levels is then stored in the luminance data memory 22 of memory unit 20.

Color assignment process

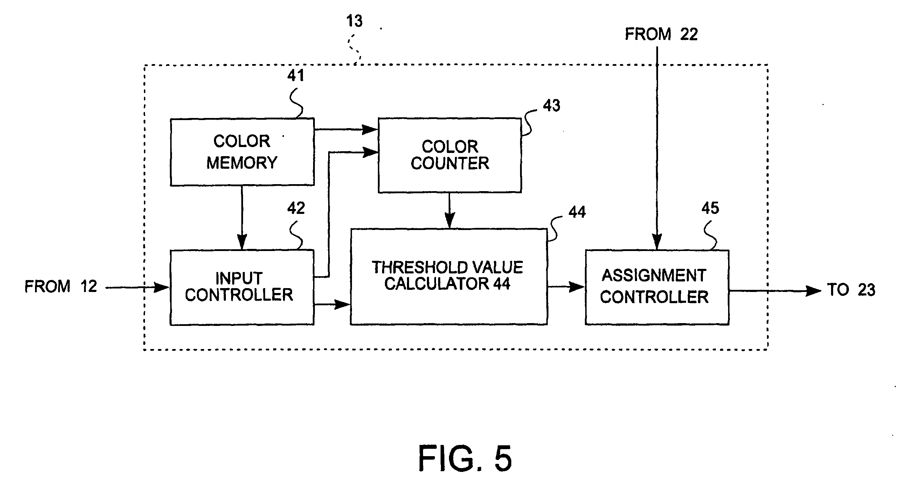

The color assignment unit 13 (Fig. 1) next assigns a printable color to the resulting low resolution luminance data. Fig. 5 is a function block diagram of a preferred embodiment of the color assignment unit 13. As shown in Fig. 5, the color assignment unit 13 has a color memory 41, an input controller 42, a color counter 43, a threshold value calculator 44, and an assignment controller 45.

The color memory 41 stores the printable colors, i.e., the colors the printer can print. The printable colors are defined by material colors provided in the printer and by the material color of the recording medium (paper) (this latter material color is also referred to as "non-printing color" in this text). For example, if the printer is an ink jet printer, the material colors would be colors of ink, which is accommodated in ink cartridges. The material colors would be heat sensitive colorants contained in a thermal paper, if the target printer is a thermal printer for printing on the thermal paper. Also, colors of toners or ink ribbons, which may be provided in target printers, would be material colors as this term is used herein.

The input controller 42 determines the colors to be used to print an image based on the printable colors stored in the color memory 41 or a subset of those colors as may be input from the parameter input controller 12. It is to be noted that the printable colors stored in color memory 41 include all colors that can be expressed by the available material colors using dithering as described below. Once the printable colors are determined, the color counter 43 determines the number N of printable colors, where N is the number of expressible colors including the non-printing color. Once the number N is determined, the threshold value calculator 44 determines the threshold values for converting the low resolution (8 level) luminance data stored in the luminance data memory 22 to N levels.

In general, a limited-color printer is a two color printer, that is, a printer capable of printing two colors, and therefore N = 3 (supposing the color of the printing medium differs from the two colors of the printer). Two threshold values are determined to convert the data to three levels. Methods for reducing the number of luminance levels to three levels will be readily apparent to one with ordinary skill in the art. One method, for example, is to calculate a temporary base threshold value for converting the data to two levels, and then based on this temporary threshold value calculating two threshold values (first and second threshold values) for conversion to three levels. Methods for calculating threshold values for conversion to two and three levels are further described below. The threshold values can also be externally input via the parameter input controller 12.

Once the threshold values are determined, the assignment controller 45 assigns one of the printable colors to

8

each pixel based on the pixel's luminance level and the threshold values.

Various algorithms can be used to determine how colors are assigned according to the luminance levels. One method, for example, is to assign the same color to pixels having the same luminance level, after converting the source data to luminance data having N luminance levels. The color assigned to each pixel having a respective one of the N luminance levels, can also be controlled by input via the parameter input controller 12. This color assignment process is the final step for determining the colors that will eventually be printed. In order to optimize the printed image it is therefore preferable to enable the user to select either one of manually specifying the threshold values for color assignment and assigning colors automatically.

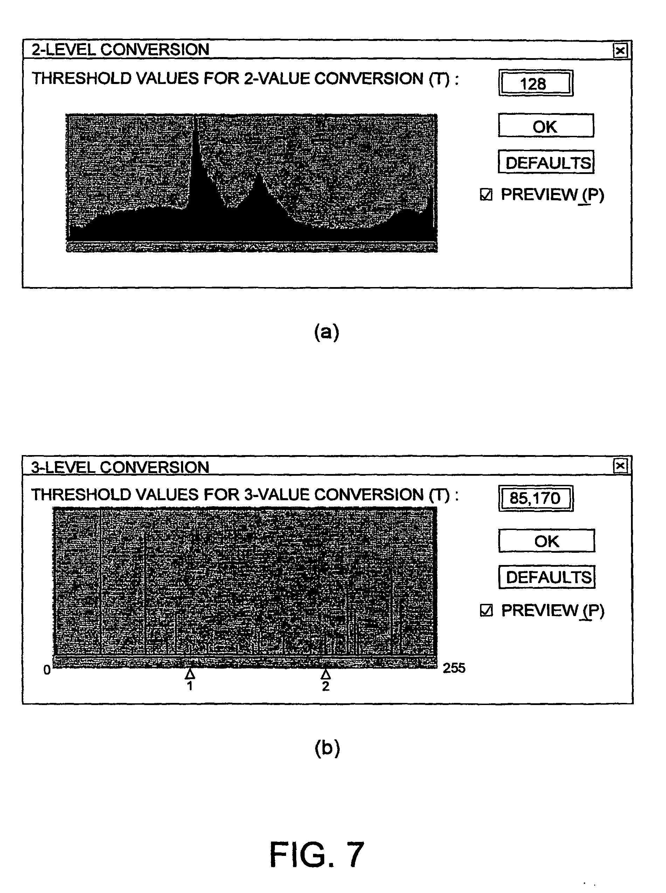

It is also possible to simply divide 256 level data that are provided (in one embodiment) from luminance calculator 17 into two or three groups for conversion to two or three levels as shown in Fig. 7 (a) and (b) rather than using processes such as described above for detecting valleys (minimums) and determining threshold values from a luminance distribution. As will be understood from Fig. 7, however, simply dividing the high luminance resolution data into groups each having the same number of luminance levels, may not reflect the specific luminance distribution of the image, and it is therefore difficult to predict what the final printed image will actually be like. It is also possible as described above to use an intermediate luminance level reduction step to convert the high resolution data to, for example, 8 level data, thereby reflecting the luminance distribution to a lower resolution level, and then divide these eight level data into three groups in the three-level conversion process to obtain the three levels for color assignment. This method also considers the luminance distribution in the low resolution conversion step, and therefore obtains print data for a print image that better reflects the image in the source data.

Preferred embodiment of an image data processing method

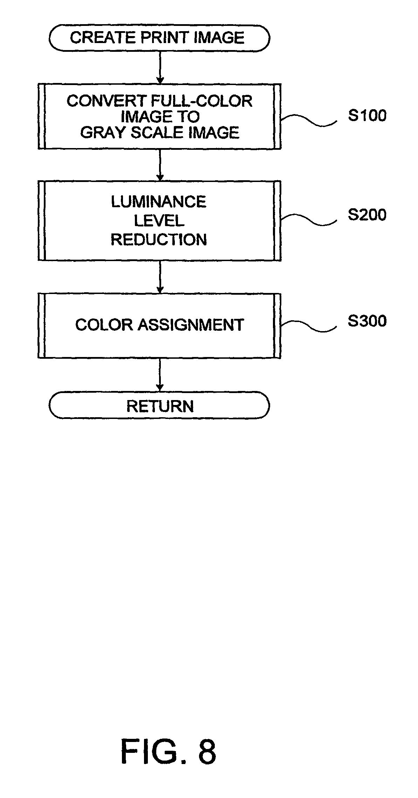

A method according to the present invention for converting source data representing a color image to print data for printing with a limited number of colors is described next with reference to Fig. 8 to Fig. 13.

Fig. 8 is a flow chart showing the overall process for generating print data by the method according to a preferred embodiment of the present invention. The first part of this process is for the source data capturing unit 11 (Fig. 1) to capture as the source data full-color or multicolor image data from which the print data will be generated, and to convert the captured source data to luminance data (step S100). The number of luminance levels in the resulting luminance data is then reduced (to e.g. N levels), which results in low resolution luminance data, to facilitate the color assignment process (step S200). One of the printable colors (e.g. N colors) is then assigned to each pixel depending on which of the N luminance levels this pixel has (step S300).

Conversion to luminance data (step S100)

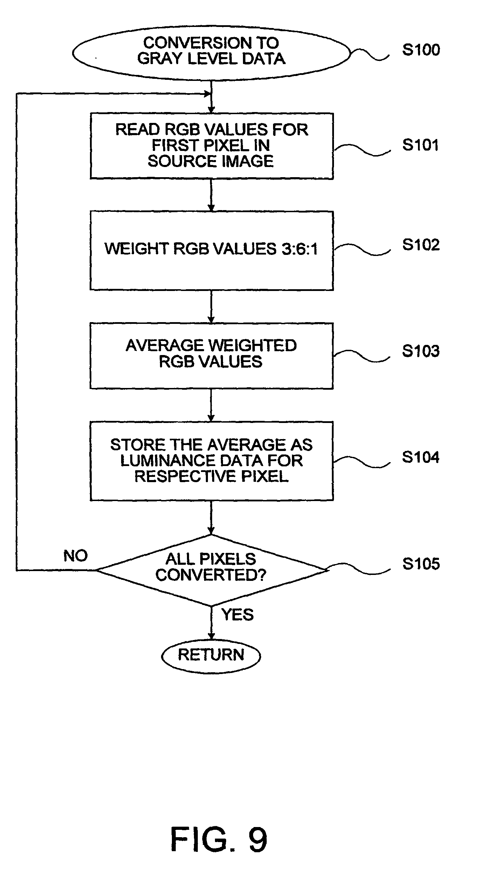

The process for converting the color data to luminance data (step S100 in Fig. 8) is described in further detail below with reference to Fig. 9. Fig. 9 is a flow chart of a preferred embodiment of the process in step S100.

Once the source data is captured, the RGB color data for the first pixel is read from the source data (step S101). This RGB color data is converted to luminance data by applying the operation corresponding to equation (2). The process shown in Fig. 9 does this by first weighting the RGB color intensity data for each pixel in accordance with equation (1) above (step S102), obtaining the sum of the weighted data for each color of RGB, dividing the sum by three to obtain the average of the weighted data (step S103), and then storing the resulting average as the luminance data for the pixel (step S104). If the RGB color data in the source data has a 24 bit color depth, e.g. each of the RGB color intensities has one of 256 levels, this process converts the color data to 256 levels of luminance data. When the process is completed for the first pixel, the same process is applied to the second pixel (step S105 returns *NO*). When steps S101 to S104 have been applied to every pixel in the image (step S105 returns *YES*), conversion to luminance data (step S100) is completed and control returns to the main procedure, which advances to step S200.

Luminance level reduction (step S200)

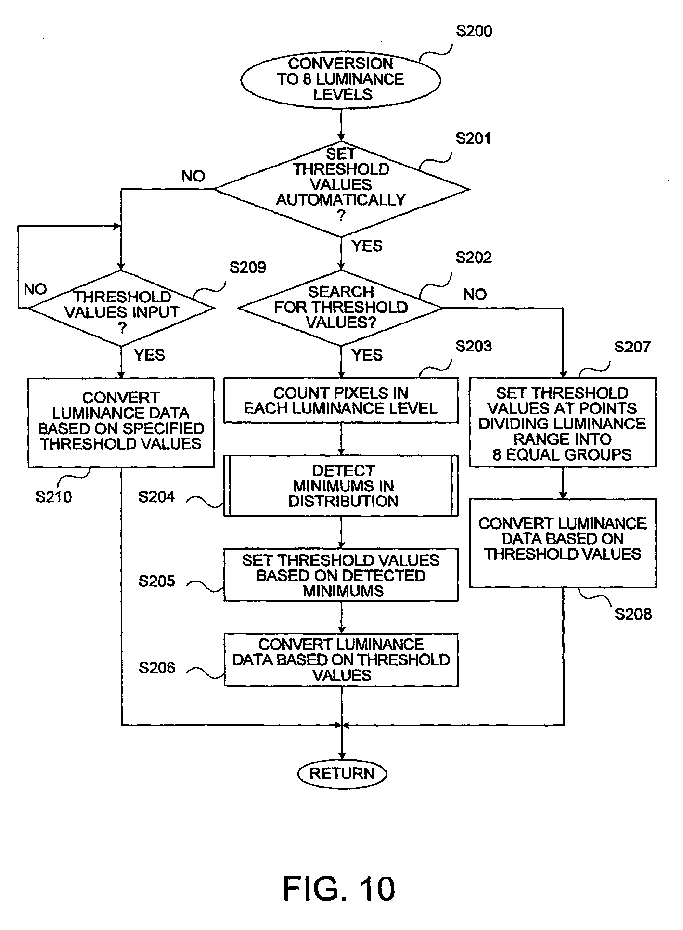

The process for converting the luminance data to low resolution luminance data is described next with reference to Fig. 10. Fig. 10 is a flow chart of a preferred embodiment of the process in step S200 in Fig. 8 that will be explained by reference to a process for converting to eight luminance levels by way of example.

The first step is to determine whether automatic setting of the threshold values has been selected (step S201). If not (step S201 returns *NO*), the operation waits until the threshold values are externally input (step S209 returns *NO*). When the threshold values have been input (step S209 returns *YES*), the luminance data is converted to eight luminance levels based on the specified threshold values (step S210).

If the automatic setting of the threshold values has been selected (step S201 returns *YES*), it is determined whether to search for the threshold values (step S202). If searching for the threshold values is not selected (step S202 returns *NO*), the luminance levels at points dividing the 256 luminance levels into substantially eight equal groups are defined as the threshold values (step S207), and the pixel luminance data is then converted to eight luminance levels using these threshold values (step S208).

If searching for the threshold values is selected (step S202 returns *YES*), the number of pixels of each luminance level in the image is counted to determine the distribution of luminance levels in the image (step S203). The resulting luminance distribution is preferably smoothed as has been explained above. minimums meeting specific conditions are then detected from the luminance distribution (step S204). It should be noted that these minimums can be detected by going from one end of the distribution to the other end and finding the luminance levels where the pixel count value stops decreasing and begins increasing such as described above, or using other methods that will be apparent to one with ordinary skill in the art. Valleys without a specific size and depth, and valleys having more than a specified number of pixels in the distribution curve, can be omitted from the use as a minimum. This minimum detection step (step S204) is further described in detail below.

After the minimums in the distribution have been detected, the threshold values are defined based on the luminance levels of the detected minimums (step S205). As has been mentioned already, the luminance levels of the minimums can be used directly as the threshold values, or these luminance levels can be processed in some way to determine the threshold values. Once the threshold values are determined, the luminance data is converted to fewer luminance levels (8 in this example) based on the threshold values (step S206).

Minimum detection

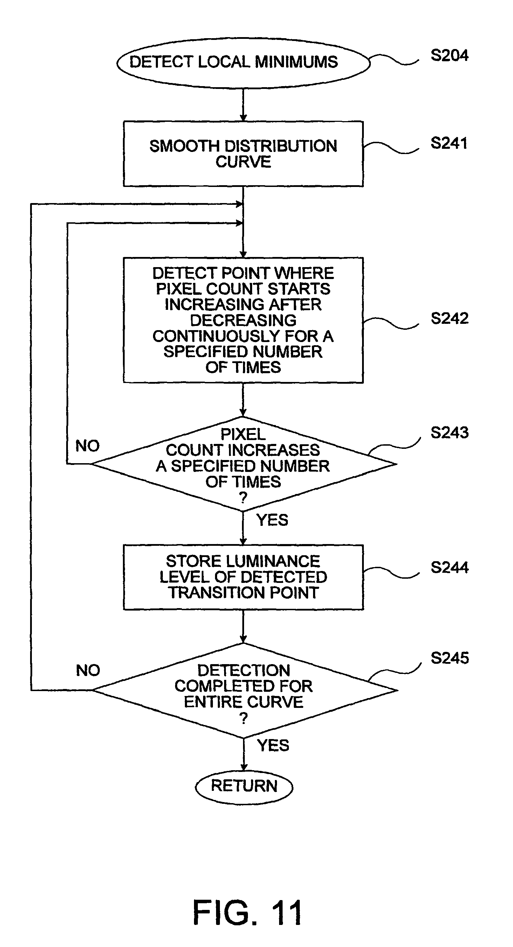

The step S204 for detecting the minimums of the distribution curve is described in further detail below with reference to Fig. 11. Fig. 11 is a flow chart of a preferred embodiment of the routine in step S204.

Once the pixel count for each luminance level and, thus, the luminance distribution are obtained, the distribution curve representing the luminance distribution is smoothed (step S241). The luminance distribution curve does not necessarily need to be stored or processed as an actual curve. It is only necessary to obtain for each luminance level the respective number of pixels, and store these pixel count values and the corresponding luminance levels in tabular form. As regards details of the smoothing process in step S241 reference is made to the previous description of Fig. 4.

The minimums of the smoothed distribution curve are then detected. The minimums can be detected by scanning the pixel counts starting from one end of the distribution curve, and detecting each transition point at which the pixel count starts increasing after it had decreased continuously for some plural number of luminance levels (step S242). Once such a transition point is detected, whether the pixel count increases continuously for some plural number of luminance levels after the transition point (step S243) is determined. If the pixel count does not increase for the specified number of consecutive luminance levels (step S243 returns *NO*), the transition point is ignored and the next transition point is detected (step S242). If the pixel count increases for the specified number of luminance levels (step S243 returns *YES*), the transition point is determined to satisfy the detection conditions and the luminance level of that transition point is stored (step S244).

It is then determined whether the minimum detection has been completed for the entire smoothed distribution curve (step S245). If not (step S245 returns *NO*), the next transition point is detected (step S242 to S245). If the entire distribution curve has been searched for minimums (step S245 returns *YES*), the minimum detection process (step S204) returns control to the low resolution conversion process (step S200). The low resolution conversion process (step S200) then steps to S205 to set the threshold values and then to S206 to reduce the luminance data to the fewer number of luminance levels as shown in Fig. 10.

Color assignment

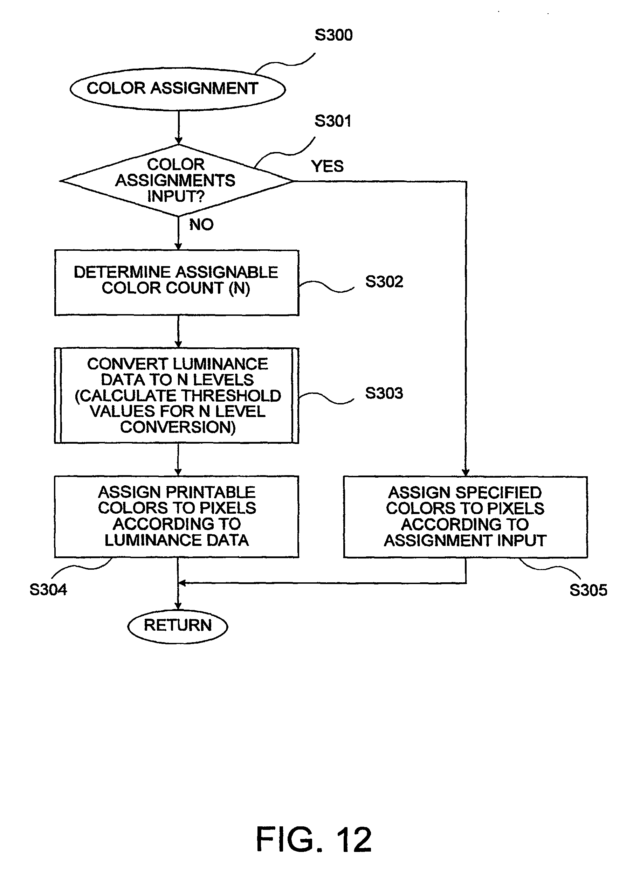

The color assignment process is described next with reference to Fig. 12. Fig. 12 is a flow chart of a preferred embodiment of the color assignment process in step S300 in Fig. 8.

When level reduction to 8 levels, for example, is completed, the next task is to assign printable colors to the luminance levels of the resulting low resolution luminance data. The color assignment process (step S300) starts by determining whether there has been any external input determining the color assignment (step S301). If the color assignment parameters have been externally defined (step S301 returns *YES*), the specific color is assigned to all pixels having a respective luminance level based on the pixel luminance data determined by the preceding steps (step S305). If the color assignment parameters are not specified (step S301 returns *NO*), the number N of printable colors (including the color of the printing medium as described above) is determined. N is normally the maximum number of colors that can be achieved by the printer, but can be set to a value less than this maximum by user input.

Once N is determined, the luminance data is further converted to N levels (step S303). To do this, N-1 threshold values are determined, and the luminance data is converted to N levels by applying these threshold values. An example of this N-level conversion process is further described below using a 3-value conversion process. After the luminance data is converted to N levels, colors are assigned to the resulting luminance levels (step S304). Once color assignment is completed, control returns to the main process (Fig. 8).

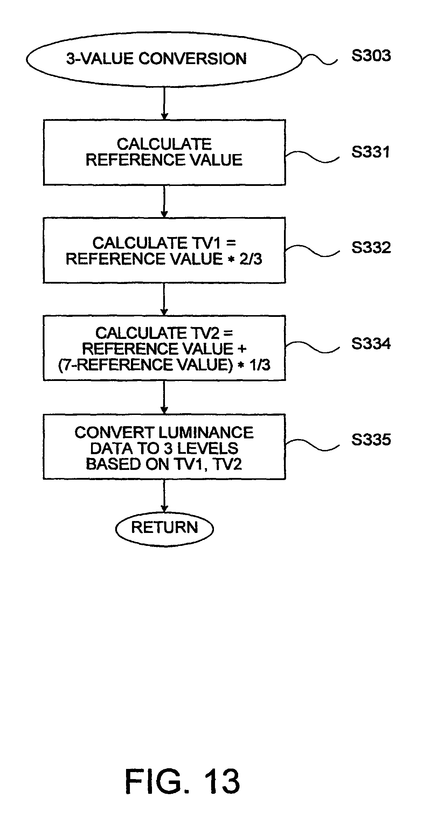

The N-level conversion process (step S300 in Fig. 8) is described in further detail below using Fig. 13. Fig. 13 is a flow chart of the process in step S303 in Fig. 12 supposing three printable colors. Conversion to three levels requires two threshold values. To convert the luminance data to three levels, this embodiment first determines a temporary reference threshold value for converting the luminance data to two levels (step S331). Various methods known to one with ordinary skill in the related art can be used for conversion to two values, and here we use a method known as discriminatory analysis, or "Ohtsu's method", to determine the temporary reference threshold value (TV0) for two-level conversion (step S332). Once this reference threshold value is determined, a first threshold value is calculated based on the reference threshold value. Various known algorithms and methods can be used here, too, and this embodiment uses TV1 = 2/3 TV0 as the first threshold value TV1 (step S332). The second threshold value TV2 is also obtained by applying a specific equation, namely TV2 = TV0 + (7-TV0)/3 in this example, to the temporary reference value (step S334). Using TV1 and TV2, the luminance data is then converted to three levels (step S335).

This embodiment has been described with reference to a case in which threshold values for converting high resolution luminance data to low resolution (8 level) data are determined by detecting the minimums of a luminance distribution curve. These threshold values can, however, be determined using various other methods. For example, the local maximums of the luminance distribution curve could be detected and the luminance level of the median between adjacent local maximums used for the threshold values.

Specific example of image data processing

Color conversion using an RGB gradation cube

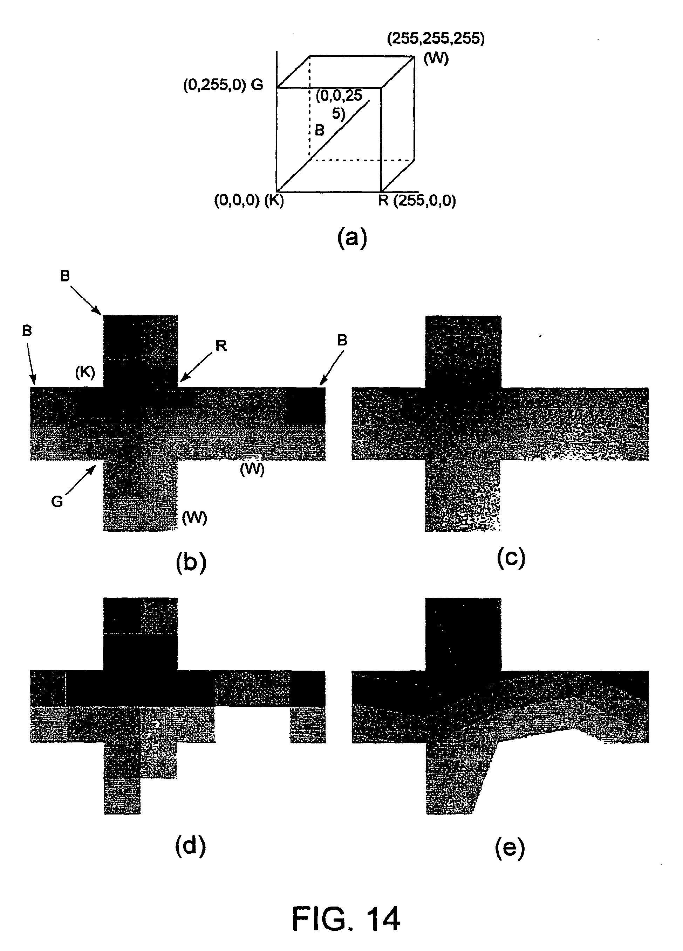

Fig. 14 shows various color conversion processes referenced to an RGB gradation cube (source data). The RGB gradation cube shown in Fig. 14 (a), has one corner at the origin of a Cartesian coordinate system defined by the axes R (red), G (green), and B (blue). The color intensity increases gradually along each axis starting from 0 at the origin (0,0,0) to a maximum of 255. In this RGB cube black (K) results when each of the colors, red, green, and blue, is at the lowest level (O) and white (W) results when red, green and blue are each at the highest level of 255.

Figs. 14 (b) to (e) show images of the six sides of the cube unfolded onto a plane, which are converted by some methods. Each image shown in Figs. 14 (b) to (d) is obtained by reducing colors in the source data by applying a dither method (Fig. 14 (b)), an error diffusion method (Fig. 14 (c)), or a simple color reduction method (Fig. 14 (d)) with black, red and white. The image shown in Fig. 14 (e) is obtained by applying the method of this invention with black, red and white as printable colors. It will be noted that while the original image is colored, figures must be submitted as black and white drawings for a patent application, and the figures in Fig. 14 are therefore presented as conforming monochrome figures.

While the need for these drawings to be in black and white creates an impression noticeably different from that of the same figures in color, printing on a limited-color printer with three or less printable colors results in relatively monochrome images, and the tendency for small spots to appear in patterns in the print image is also evident in the drawings in Fig. 14.

As will be appreciated from Fig. 14 (b), color reduction by dithering produces fine granular points, which result in noise when assigned to only a few colors. In the image in Fig. 14 (c), we can see color reduction by error diffusion also produces dispersed fine grains as noise.

The result of simple color reduction, shown in Fig. 14 (d) shows a completely different pattern.

The image shown in Fig. 14 (e), which results from the method of the present invention, shows a pattern of dividing luminance levels to eight levels. Using threshold values to convert the cube colors to gray scale levels before assigning colors results in eight patterns, and it will be noted that these patterns vary gradually in stages according to the change in luminance level.

Image data processing of gradations on a plane

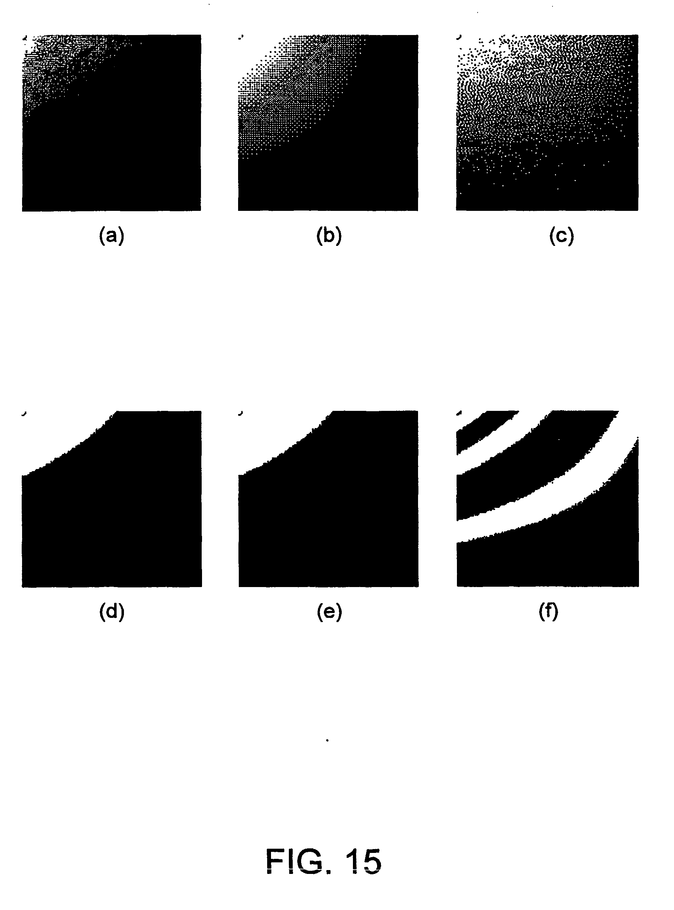

Fig. 15 shows the results of image data processing a color gradation image. As noted with regard to Fig. 14, the color images are shown as monochrome images to conform with patent filing requirements. Fig. 15 (a) shows source data that represents a gradation image in which black intensity increases gradually from top left down and red intensity increases from top left to right. The result of processing this image by dithering is shown in (b), error diffusion in (c), and the method of this invention in (d), (e), and (f). All of the images were processed for the three printable colors, black, red and white. While patterns are slightly different in the dithered and error diffusion images (b) and (c), they both contain a dispersed pattern of dots. Image (d) resulting from the present invention expresses both the change in luminance and the change in color brightness. While image (d) is also a digital representation, it is a well-defined image free of noise that directly reflects the change in gradation. Image (e) was achieved using the method of the invention to intentionally insert low luminance colors at intermediate luminance levels as a result of color assignment input by the user. Image (f) shows a different pattern resulting from the method of the invention applying a different set of color assignments intentionally input by the user. As will be seen from these images, the method of the invention creates images in which luminance gradations are digitally clearly defined.

Exemplary control screen

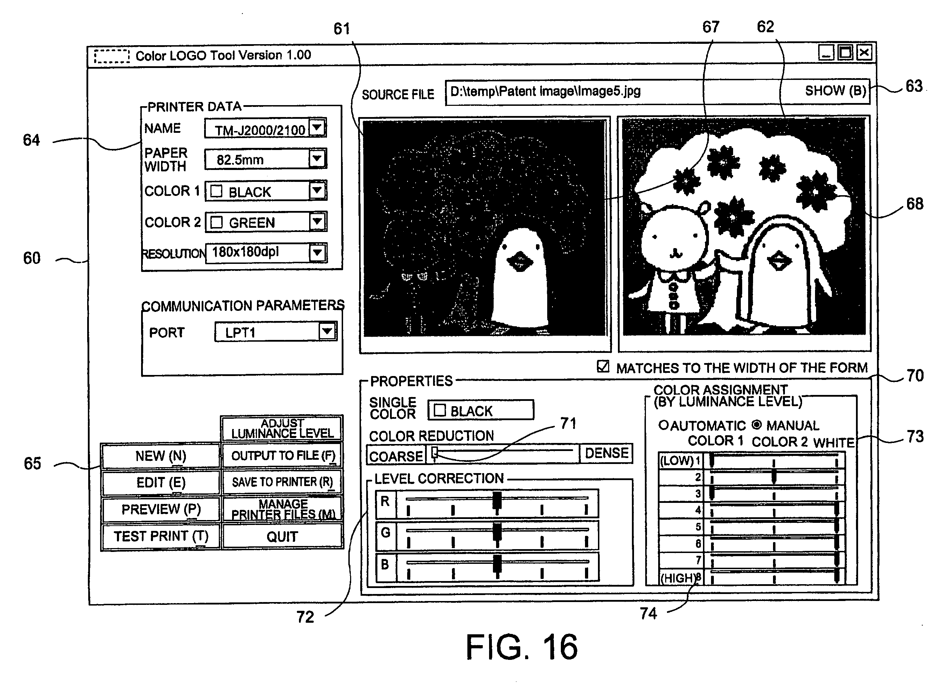

Fig. 16 shows an example of an control screen presented by a system according to a preferred embodiment of the present invention. As noted with regard to Fig. 14 and Fig. 15 above, Fig. 16 also shows images presented on screen in color as monochrome images to conform with filing requirements.

An image 61 of the source data is presented in the top center of the screen. The print image 62 resulting from processing the source image 61 is shown to the right. The user can click on the source file button 63 shown at the top right to select the source file from which the source data for the source image 61 is read. The source data capturing unit 11 (Fig. 1) then reads the source data from the selected file. The display controller 14 (Fig. 1) then controls the display of the source data as source image 61 shown in Fig. 16 as described above.

A print parameter input box 64 is provided at the top left of the screen 60. This input box 64 is used to specify particular printer data, including the model of printer used for printing, paper width, print colors used, and printer resolution.

At the bottom left of the screen is a control box 65 with various controls for controlling the basic print data creation process and managing the print data files. More specifically, the control box 65 contains basic control buttons for generating and editing the print data, outputting finished print data or ones in progress, saving print data to the printer, and other buttons for manipulating the print data files. The control box 65 thus provides controls for handling essential operations from creating to saving the print data files.

A properties box 70 is located at the bottom center of the screen 60. The basic functions accessible through this properties box 70 include the color reduction function, level correction, and color assignment. The color reduction process is controlled in this properties box 70 using a slider 71 for setting the color reduction to one of three levels varying from coarse (low resolution) to fine (high resolution) control. In this example setting the slider 71 to the "coarse" position applies color reduction according to the present invention, moving the slider to the middle position selects dithering, and the "fine" position selects error diffusion. The level correction box 72 is used to separately correct each of the RGB luminance levels to one of four settings. The color assignment box 73 enables the user to select either an automatic or manual mode. If the manual mode is selected, the user can assign one of three colors (first color, second color, and white (non-printing color)) to all pixels of a respective one of the luminance levels 74, to which the source image has been reduced (luminance levels 1 to 8, 8 gradations).

In the exemplary screen 60 shown in Fig. 16, the manual mode is selected, the first color is assigned to pixels in luminance levels 1 and 3, and the second color is assigned to pixels in luminance level 2. This enables the luminance difference of the petals 67 in the cherry blossoms, which are substantially indistinguishable in the source image 61, to be displayed with different colors so that petals can be displayed as a clearly distinguishable pattern as indicated by the flower petals 68 in the print image 62.

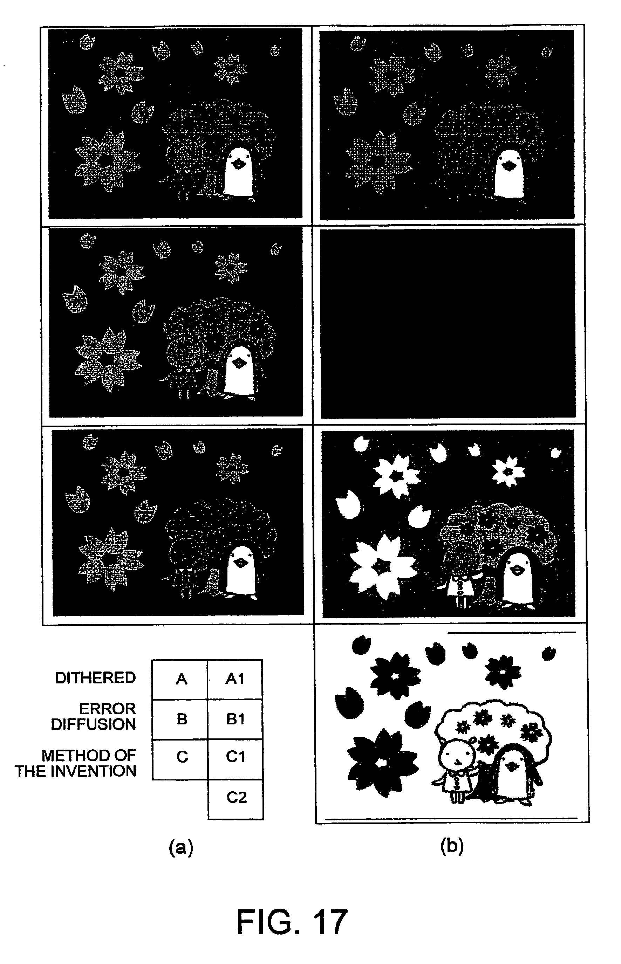

Fig. 17 shows images resulting from image data processing by the present invention, dithering, and error diffusion processes with black, red and white as printable colors. Fig. 17 also shows these color images as monochrome images due to filing requirements. The actual color images are obviously slightly different in appearance, but the differences in the images resulting from the various processing operations can be recognized from the figures. Fig. 17 (a) shows the numbers assigned and processing operations applied to the figures shown in (b), and (b) shows the images before and after image data processing. The images in (b) were all derived from the same original color image, which had a deep, brilliant blue background and cherry blossoms in various light and dark shades of pink. Multiple relatively pale colors were used for the other characters and figures.

The images shown in (b) are further described below. Images A and A1 in the top row were dithered. Image A was reduced to 8 colors by dithering the original color image. Image A1 is the print image resulting from assigning red, black, and white (non-printing color) to the pixels in image A based on the color component (RGB value) of each pixel. Red, for example, is assigned to pixels where the color intensity value (R,G,B) = (1,0,0). Note the dot pattern appearing in the background of the print image A1.

Image B is the result of using error diffusion to reduce the original color image to 8 colors. The same process used to convert image A to image A1 was applied to obtain image B1 by assigning red, black and white to the pixels in image B based on the color value (RGB value) of each pixel. Note the pattern of spots that also appears in the background of print image B1.

Image C is the result of image data processing using the method of the present invention, converting the original color image to a monochrome halftone image containing 8 luminance levels. Red, black and white were then assigned to the pixels based on the luminance level of the respective pixel, and the result was printed as image C1. Note that with the method of this invention there are no spots in the background, which is printed in even red (which appears as a dark gray in the figure due to the brightness of the red). Image C2 was also obtained by assigning red, black, and white to image C, but in this case the image was manipulated to obtain a clearer print image by, for example, assigning red to all pixels in the cherry blossom petals that have the same luminance level, and assigning white to all pixels in the blue background that have the same luminance level. It will thus be understood that a well defined two- or three-color print image can be created based on the luminance values of the original image by using the method of this invention.

Color expression achieved with halftones

Using halftone to express colors is described next.

If there are three material colors, that is, two colors of, e.g., ink and white (the non-printing color of the paper), and each pixel is represented by a 2 x 2 matrix of four dots (dither units), fifteen colors (dithered tones) can be expressed with each matrix of four dots by assigning respective colors to each dot. This means that each pixel can express one of fifteen colors (printable colors). Yet more specifically, by controlling the area of each color in a particular pixel, each pixel can express one of fifteen tones. Note that this ignores the position of each color in the pixel, and considers only the area ratio of the colors.

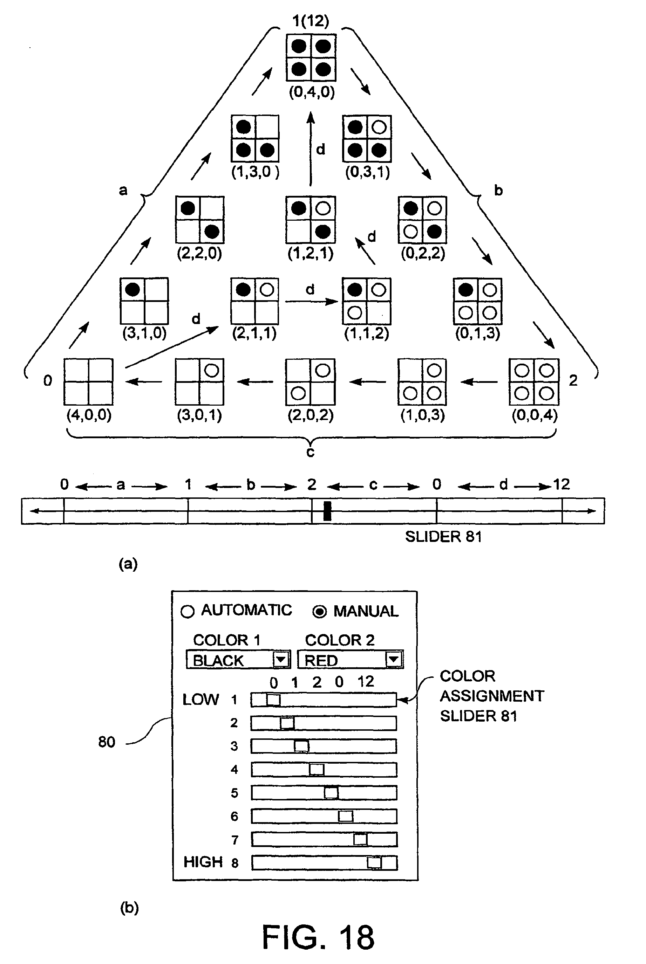

How fifteen printable colors can be expressed, and how the luminance levels in an image containing 8 luminance levels are assigned to these fifteen printable colors, is described next with reference to Fig. 18. Fig. 18 (a) shows the relationship between the 15 tones (colors) that can be expressed with four dots per pixel, and the color assignment sliders 81 in the color assignment box 73 shown in Fig. 18 (b) using a printer capable of printing two colors (three material colors including the non-printing color). Fig. 18 (b) shows a color assignment box 80 for assigning 8 luminance levels to fifteen colors. In Fig. 18 a black dot (•) denotes black, a circle (o) denotes red, and a blank denotes a white dot. The three values in parenthesis below each matrix show the number of (white, black, red) dots in the matrix (pixel). In other words, the shade of each pixel is determined by the ratio of dots (area) of each color in the four dots constituting the pixel.

Region a (0 -> 1) in Fig. 18 shows the matrixes containing only white and black dots, more particularly, the range from a matrix with four white dots (0) to a matrix with four black dots (1). Region b (1 -> 2) shows the matrixes containing only black and red dots, namely the range from four black dots (1) to four red dots (2). Region c (2 -> 0) shows matrixes containing only red and white dots, i.e., the range from four red dots (2) to four white dots (O). Region d (0 - > 12) shows the matrixes variously combining white, red, and black dots, and covers the transition from four white dots (0) to four black dots (12).

The relationship between the color assignment determined by the position of the slider 81 in Fig. 18, i.e., regions a, b, and c of the slider will be understood from the figures. That is, the pixels of a certain luminance level change gradually from white to black as the associated slider 81 moves from 0 to 1, from black to red as the slider moves from 1 to 2, from red to white as the slider moves from 2 to 0, and from white through a mixture of white, red, and black to black as the slider moves from 0 to 12.

The color assignment sliders 81 provided for each luminance level 1 to 8 in the color assignment box 80 in Fig. 18 (b) are used to assign one of the fifteen printable colors to each luminance level. Fig. 18 (b) shows an example of a color assignment box for two printable colors where the first color is black and the second color is red. In this color assignment box 80 each slider 81 is moved along the scale from 0 -> 1 -> 2 -> 0 -> 12 for each of the eight luminance levels 1 to 8 to assign a particular color to that luminance level. Fig. 18 (b) shows an example in which sliders 81 are used to assign any of fifteen colors to eight luminance levels, but it will be apparent that if a full-color image (or a 256 gray scale image) is reduced to fifteen luminance levels instead of eight, each of these fifteen levels can be similarly assigned to one of fifteen colors.

As described above, constant, fixed color assignments can result in important luminance level borders being assigned to the same color, creating an image in which important image elements are difficult to discern. However, by enabling the user to freely assign the printable colors according to image luminance levels and easily change the color assignments, a clear, expressive print image can be created.

Furthermore, by increasing the number of assignable colors using dithering or shot gradation, a method of changing a number of ejected droplets for a pixel in an inkjet printer, and enabling the user to freely assign the printable colors, printer output can be made more expressive even when a printer, such as a two-color printer, is used that can only print a limited number of colors.

Alternative embodiment

A method for converting full-color source data (such as a color image with a color intensity of 256 levels for each of RGB) first to a high resolution gray scale image (containing 256 luminance levels), then converting this high resolution gray scale image to a low resolution image (having 8 luminance levels), and then assigning one of the printable colors to each pixel according to the luminance level (1 to 8) of the pixel is described as a first embodiment of the invention for generating print data. The method of the invention can be modified, however, as described below.

First, the colors of a full-color source image are reduced using a simple color reduction technique. If the source data is a full-color image with a 256 level color intensity for each of RGB, for example, it is reduced to an 8-color image. This reduced image is then converted to a gray scale image by applying equation (1) to obtain low resolution (8 level) luminance data. Print colors are then assigned to each pixel according to the luminance level (1 to 8) of the pixel as described above. In other words, instead of reducing the number of luminance levels after converting the colors of the source data to gray scale levels in order to obtain the low resolution luminance data used for color assignment, this alternative embodiment first applies a color reduction process to the source data and then converts the resulting image to a gray scale image.

The embodiment described above assumes a logo tool for generating logo data saved in a POS printer or similar printer. However, the basic technical concept of the invention, that is, assigning color to each pixel according to the luminance level of the respective pixel by converting a color image to a gray scale image, is not limited to such a logo tool and can be used in other applications. The invention can, for example, be used in a printer driver for printing color bitmap images on a printer that can only print a limited number of colors (such as two) as part of a device control system provided by OLE for Retail POS (referred to as "OPOS" below) for the Windows® operating system (OS). More specifically, applications such as these conventionally require use of a separate bitmap conversion tool to convert a full-color image to a 2-color image for printing. Using the present invention, however, these files can be printed without this file conversion step. Furthermore, images resulting from image data processing by the invention are not limited to output on a printer, and can be output on a display device.

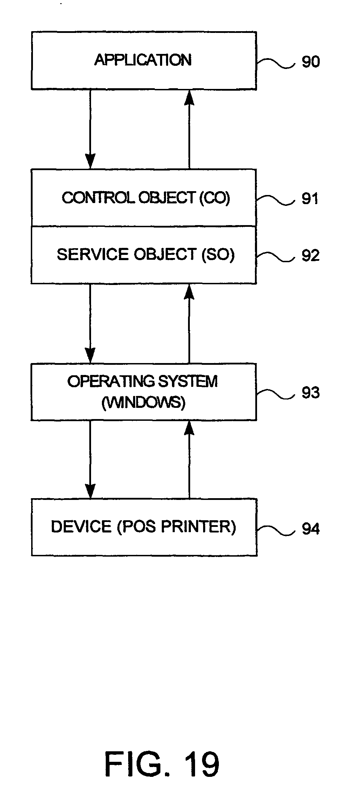

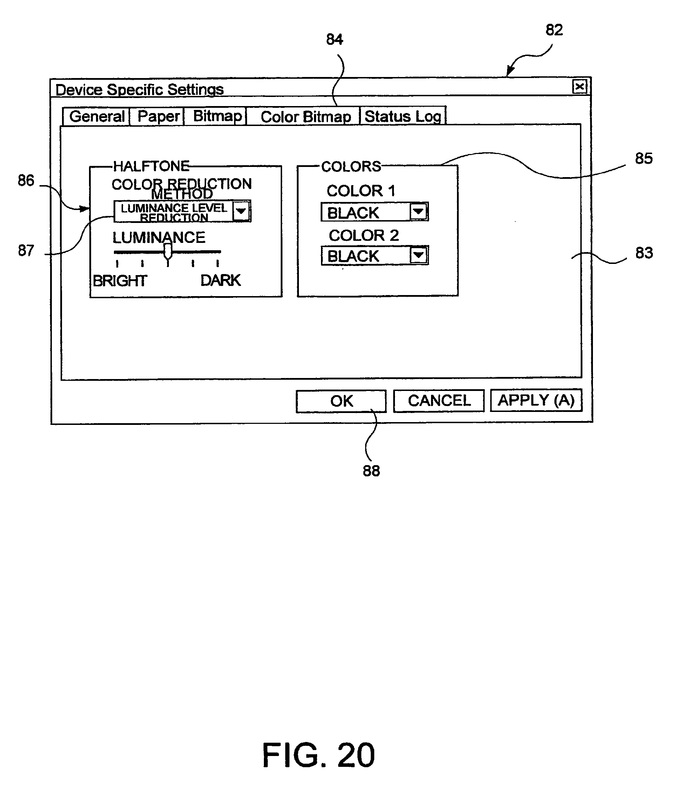

Using the invention in an OPOS system is described next below with reference to Fig. 19 and Fig. 20 to show how the system and method according to the invention can be implemented using a personal computer. Fig. 19 shows the basic concept of OPOS. Device 94 can be a printer or customer display, and is described below as a printer.

OPOS provides a device-independent interface for printers and other peripherals for POS application programs based on standardized specifications running under Windows®. For the POS application 90 to output from printer 94, it first passes the data to the printer control object (CO) 91. The control object 91 then passes the data to the service object (SO) 92 for the model of the output printer, and the operating system (OS) 93 then passes the data to the printer 94. If the printer 94 is a two or three color printer, multicolor images must be reduced to the printable colors for printing.

With the device control system provided by OPOS the service object 92 primarily runs a specific process for a particular device 94. The luminance conversion function, luminance level reduction function, and color assignment function of the present invention can therefore be built into the service object 92 so that source data is converted to print data that can be printed by the printer 94 and is then sent through the OS 93 to the printer 94 for printing.

In other words, if full-color image data is sent, as source data, from the POS application 90 to the device control system provided by OPOS, the service object 92 determines the luminance level of each pixel in the source data, and assigns a particular color to each pixel according to the pixel's luminance level as described above, thereby creating 2-color or 3-color print data for printing by the POS printer. The service object 92 then sends this print data through the OS 93 to the printer 94. The process for converting full-color image data to print data for printing with a limited number of colors can therefore be built into the service object 92. By writing the service object 92 to perform this image conversion function, individual application programs do not need to run a process for converting full-color image data to 2-color or 3-color print data for printing by the printer 94, and application development is thus made easier.

A dialog box for controlling this image data conversion process is shown in Fig. 20. The service object 92 is written to include a service routine that includes reducing color from a full color image and can display a dialog box 82 such as shown in Fig. 20. The content displayed in display area 83 changes according to the selected control button. If the color bitmap tab 84 is selected, for example, a color selector 85 and color reduction method selector 86 such as shown in Fig. 20 are displayed in the display area 83. In this example the arrow shown on the right side of the first and second color selectors can be clicked to select a particular color. The example shown in Fig. 20 anticipates a 2-color printer and enables selecting only two colors, but it will be understood that selecting three or more colors is also be possible.

Dithering or another color reduction method can be selected at the color reduction method selection box 87 of the color reduction method selector 86. If luminance reduction is selected by the color reduction method selection box 87 and the OK button 88 is then clicked, a properties box 70 such as shown in Fig. 16 is displayed in the display area 83, for example, so that the user can adjust the process as described above. Note that the source image 61 and print image 62 after the color reduction and color assignment processes can also be displayed as shown in Fig. 16.

The present invention can generate a print data based on the luminance levels of the source data image by converting the color of each pixel in a source data file containing multicolor image data, for example, to a luminance value, and then assigning a particular printable color to each pixel based on the luminance level of the pixel. This method generates print data enabling the original image to be printed accurately, clearly and without spots or noise in the print image even when it is printed with a limited number of colors.

In addition to dithering and other color reduction methods, this invention can also assign colors based on the luminance level and apply other image data processing operations to print multicolor source images using only a few colors, and thereby provides a system and method capable of applying numerous image processes.

**Claims**

1.  A system for processing image data for display or printout by an output device (94) comprising:

    a source data capturing unit (11) for obtaining source data containing a representation of an image, a graphic and/or a text in plural colors;

    a data converter (15) comprising a luminance calculator (17) for converting said color data for each pixel to first luminance data representing one of a first number of luminance levels, and a gray level processor (18) for further converting said first luminance data for each pixel to second luminance data representing one of a second number of luminance levels, said second number being smaller than said first number; and

    a color assignment unit (13) for assigning one of N printable primary colors that are available in said output device (94) to each pixel according to the luminance level represented by said second luminance data of the pixel, wherein N 3;

    **characterized in that** the gray level processor (18) comprises:

    a distribution calculator (31-34) for calculating a luminance distribution by counting for each luminance level of said first number the number of pixels whose corresponding luminance data represents that luminance level, and for detecting one or more luminance levels that represent local pixel count minimums in said luminance distribution; and

    threshold value selecting means (35) for setting threshold values based on the one or more minimums;

    wherein the gray level processor (18) is adapted to reduce said first number of luminance levels to said second number based on the threshold values.

2.  The system of claim 1, wherein the color data of each pixel represents color intensity values of source primary colors, and the data converter (15) is adapted to convert the color data to the first luminance data by weighting each color intensity value by a weighting factor assigned to the respective source primary color, and summing the weighted color intensity values.

3.  The system of claim 2, wherein the source primary colors are red, green, and blue, and the ratio of said weighting factors is equal or approximately equal to R:G:B = 3:6:1 where R represents red, G represents green and B represents blue.

4.  The system of any one of the preceding claims , wherein the distribution calculator (31-34) is adapted to smooth said luminance distribution, and to detect said one or more minimums from the smoothed luminance distribution.

5.  The system of any one of the preceding claims, wherein the distribution calculator (31-34) is adapted to detect said one or more minimums by scanning said luminance distribution from one of the smallest and the highest luminance level to the other one of these two luminance levels and finding one or more luminance levels at which the pixel count value starts increasing and keeps increasing for a predetermined plurality of consecutive luminance levels, after it had decreased for a predetermined plurality of consecutive luminance levels.

6.  The system of any one of claims 1 to 5, wherein said second number of luminance levels is eight.

7.  The system of any one of claims 1 to 5, wherein said second number of luminance levels is N, and the color assignment unit (12) is adapted to assign to each of said N luminance levels a respective one of said N printable primary colors.

8.  The system of any one of the preceding claim, wherein the color assignment unit (12) comprises color assignment selection means (42) responsive to user input for specifying or changing the assignment of a printable primary color to each pixel based on the luminance level represented by the second luminance data of the pixel.

9.  The system of any one of claims 1 to 8, wherein said output device (94) is a printer for printing on a printing medium, and the printable primary colors are defined by material colors provided for printing in the printer, said material colors including colors of ink or heat sensitive colorants, and the color of a printing medium itself.

10. The system of claim 9, wherein the printable colors include halftones that can be created by combining said material colors.

11. Use of the system of any one of claims 1 to 10 for generating logo data suitable for being stored in a POS printer as said output device (94) connected to a POS terminal.

12. A method of processing image data for display or printout by an output device (94), comprising steps of:

(a) obtaining and storing source data containing a representation of an image, a graphic and/or a text in plural colors;
(b) converting color data of each pixel in the source data to luminance data for the respective pixel, step (b) comprising:
(b1) converting said color data for each pixel to first luminance data representing one of a first number of luminance levels, and
(b2) further converting said first luminance data for each pixel to second luminance data representing one of a second number of luminance levels, said second number smaller than said first number;
(c) assigning one of N printable primary colors that are available in the output device (94), to each pixel according to the luminance level represented by said second luminance data of the pixel, wherein N ≥ 3;

**characterized in that** step (b2) further comprises:

(b2.1) calculating a luminance distribution by counting for each luminance level of said first number the number of pixels whose corresponding luminance data represents that luminance level;
(b2.2) detecting one or more luminance levels that represent local pixel count minimums in said luminance distribution;
(b2.3) setting threshold values based on the one or more minimums; and
(b2.4) reducing said first number of luminance levels to said second number based on the threshold values.

13. The method of claim 12, wherein the color data of each pixel represents intensity values of source primary colors, and step (b) comprises converting the color data to the first luminance data by weighting each color intensity value by a weighting factor assigned to the respective source primary color, and summing the weighted color intensity values.

14. The method of claim 13, wherein the source primary colors are red, green, and blue, and the ratio of said weighting factors is equal or approximately equal to R:G:B = 3:6:1 where R represents red, G represents green and B represents blue.

15. The method of any one of claims 12 to 14, wherein step (b2.2) detects the one or more minimums by scanning said luminance distribution from one of the smallest and the highest luminance level to the other one of these two luminance levels and finding one or more luminance levels at which the pixel count value starts increasing and keeps increasing for a predetermined plurality of consecutive luminance levels, after it had decreased for a predetermined plurality of consecutive luminance levels.

16. The method of any one of claims 12 to 15, wherein step (b2) further comprises
(b2.5) smoothing said luminance distribution, and
step (b2.2) comprises detecting the one or more minimums from the smoothed luminance distribution.

17. The method of any one of claims 12 to 16, wherein said second number of luminance levels is eight.

18. The method of any one of claims 12 to 17, wherein said second number of luminance levels is N, and
step (c) comprises assigning to each of said N luminance levels a respective one of said N printable primary colors.

19. The method of any one of claims 12 to 18, wherein step (c) comprises responding to user input by specifying or changing the assignment of a printable primary color to each pixel based on the luminance level represented by the second luminance data of the pixel.

20. The method of any one of claims 12 to 19 applied to processing image data for printout on a printing medium by a printer (94), wherein the printable primary colors are defined by material colors provided for printing in the printer, said material colors including colors of ink or heat sensitive colorants, and the color of said printing medium itself.

21. The method of claim 20, wherein the printable colors include halftones that can be created by combining said material colors.

22. Use of the method of any one of claims 12 to 21 for generating logo data suitable for being stored in a POS printer connected to a POS terminal.

23. A medium readable by a machine, the medium carrying a program of instructions executable by the machine to perform a method according to any one of claims 12 to 21.

24. A computer program composed of instructions executable by a machine to perform a method according to any one of claims 12 to 22.

**Patentansprüche**

1. System zur Bilddatenverarbeitung zum Anzeigen oder zum Ausdrucken mittels eines Ausgabegeräts (94), aufweisend:

   eine Quelldatenerfassungseinheit (11), die Quelldaten erhält, welche eine Darstellung eines Bildes, einer Graphik und/oder von Text in einer Vielzahl von Farben enthalten;
   einen Datenumsetzer (15), der einen Leuchtdichtenrechner (17) zum Umwandeln der Farbdaten für jedes Pixel in erste Leuchtdichtendaten, welche eine einer ersten Anzahl von Leuchtdichtenstufen wiedergeben, und einen Graustufenprozessor (18) aufweist, um die ersten Leuchtdichtendaten für jedes Pixel in zweite Leuchtdichtendaten umzuwandeln, welche eine zweite Anzahl Leuchtdichtenstufen wiedergeben, wobei die zweite Anzahl kleiner ist als die erste Anzahl; und
   eine Farbzuordnungseinheit (13) zum Zuordnen einer von N druckbaren Primärfarben, die in dem Ausgabegerät (94) verfügbar sind, zu jedem Pixel entsprechend der von den zweiten Leuchtdichtendaten des Pixels wiedergegebenen Leuchtdichtenstufe, wobei N = 3;

   **dadurch gekennzeichnet, daß** der Graustufenprozessor (18) folgendes aufweist:

   einen Verteilungsrechner (31-34) zum Berechnen einer Leuchtdichtenverteilung durch das Zählen der Zahl der Pixel, für jede Leuchtdichtenstufe der ersten Anzahl, deren entsprechende Leuchtdichtendaten diese Leuchtdichtenstufe wiedergeben, und zum Erfassen von einer oder mehr Leuchtdichtenstufen, welche örtliche Pixelzählminima in der Leuchtdichtenverteilung wiedergeben; und
   eine Schwellenwertauswähleinrichtung (35), die Schwellenwerte auf der Grundlage des Minimums oder der Minima setzt;

   wobei der Graustufenprozessor (18) ausgebildet ist, die erste Anzahl der Leuchtdichtenstufen auf der Grundlage der Schwellenwerte auf die zweite Anzahl zu reduzieren.

2. System nach Anspruch 1, bei dem die Farbdaten jedes Pixels Farbintensitätswerte von Quellprimärfarben wiedergeben, und der Datenumsetzer (15) ausgebildet ist, die Farbdaten durch Gewichten jedes Farbintensitätswertes mit einem der jeweiligen Quellprimärfarbe zugeordneten Gewichtungsfaktor in erste Leuchtdichtendaten umzuwandeln und die gewichteten Farbintensitätswerte zu summieren.

3. System nach Anspruch 2, bei dem die Quellprimärfarben rot, grün und blau sind und das Verhältnis der Gewichtungsfaktoren gleich oder etwa gleich R:G:B = 3:6:1 ist, wobei R für rot, G für grün und B für blau steht.

4. System nach einem der vorhergehenden Ansprüche, bei dem der Verteilungsrechner (31-34) ausgebildet ist, die Leuchtdichtenverteilung zu glätten und das eine Minimum oder die Minima aus der geglätteten Leuchtdichtenverteilung zu erfassen.

5. System nach einem der vorhergehenden Ansprüche, bei dem der Verteilungsrechner (31-34) ausgebildet ist, das Minimum oder die Minima durch Abtasten der Leuchtdichtenverteilung von entweder der kleinsten oder der höchsten Leuchtdichtenstufe bis zur anderen dieser beiden Leuchtdichtenstufen zu erfassen und eine oder mehr Leuchtdichtenstufen zu finden, an denen der Pixelzählwert zuzunehmen beginnt und über eine vorherbestimmte Vielzahl aufeinanderfolgender Leuchtdichtenstufen weiterhin zunimmt, nachdem er über eine vorherbestimmte Vielzahl aufeinanderfolgender Leuchtdichtenstufen abgenommen hatte.

**6.** System nach einem der Ansprüche 1 bis 5, bei dem die zweite Anzahl Leuchtdichtenstufen acht ist.

**7.** System nach einem der Ansprüche 1 bis 5, bei dem die zweite Anzahl Leuchtdichtenstufen N ist, und die Farbzuordnungseinheit (12) ausgebildet ist, jeder der N Leuchtdichtenstufen eine jeweilige der N druckbaren Primärfarben zuzuordnen.

**8.** System nach einem der vorhergehenden Ansprüche, bei dem die Farbzuordnungseinheit (12) eine Farbzuordnungswähleinrichtung (42) aufweist, die auf eine Benutzereingabe zur Spezifizierung oder Änderung der Zuordnung einer druckbaren Primärfarbe zu jedem Pixel auf der Grundlage der von den zweiten Leuchtdichtendaten des Pixels wiedergegebenen Leuchtdichtenstufe anspricht.

**9.** System nach einem der Ansprüche 1 bis 8, bei dem das Ausgabegerät (94) ein Drucker zum Bedrucken eines Druckmediums ist, und die druckbaren Primärfarben von Materialfarben bestimmt sind, die zum Drucken im Drucker bereitgestellt sind, wobei die Materialfarben Farben von Tinte oder wärmeempfindliche Farbstoffe umfassen und die Farbe eines Druckmediums selbst.

**10.** System nach Anspruch 9, bei dem die druckbaren Farben Halbtöne einschließen, die durch Kombinieren der Materialfarben geschaffen werden können.

**11.** Benutzung des Systems gemäß einem der Ansprüche 1 bis 10 zum Generieren von Logodaten, die ausgebildet sind, in einem POS- Drucker als dem mit einer POS-Kasse verbundenen Ausgabegerät (94) gespeichert zu werden.

**12.** Verfahren der Bilddatenverarbeitung zum Anzeigen oder Ausdrucken mittels eines Ausgabegeräts (94), folgende Schritte aufweisend:

(a) Erhalten und Speichern von Quelldaten, die eine Wiedergabe eines Bildes, einer Graphik und/oder von Text in einer Vielzahl von Farben enthalten;
(b) Umwandeln von Farbdaten jedes Pixels in den Quelldaten in Leuchtdichtendaten für das jeweilige Pixel, wobei der Schritt (b) folgendes aufweist:
(b1) Umwandeln der Farbdaten für jedes Pixel in erste Leuchtdichtendaten, die eine einer ersten Anzahl von Leuchtdichtenstufen wiedergeben, und
(b2) weiteres Umwandeln der ersten Leuchtdichtendaten für jedes Pixel in zweite Leuchtdichtendaten, die eine einer zweiten Anzahl von Leuchtdichtenstufen wiedergeben, wobei die zweite Anzahl kleiner ist als die erste Anzahl;
(c) Zuordnen einer von N druckbaren Primärfarben, die in dem Ausgabegerät (94) verfügbar sind, zu jedem Pixel entsprechend der von den zweiten Leuchtdichtendaten des Pixels wiedergegebenen Leuchtdichtenstufe, wobei N = 3;

**dadurch gekennzeichnet, daß** der Schritt (b2) ferner folgendes aufweist:

(b2.1) Berechnen einer Leuchtdichtenverteilung durch Zählen der Anzahl Pixel für jede Leuchtdichtenstufe der ersten Anzahl, deren entsprechende Leuchtdichtendaten diese Leuchtdichtenstufe wiedergeben;
(b2.2) Erfassen von einer oder mehr Leuchtdichtenstufen, die lokale Pixelzählminima in der Leuchtdichtenverteilung wiedergeben;
(b2.3) Setzen von Schwellenwerten auf der Grundlage des Minimus oder der Minima; und
(b2.4) Reduzieren der ersten Anzahl Leuchtdichtenstufen auf die zweite Anzahl auf der Grundlage der Schwellenwerte.

**13.** Verfahren nach Anspruch 12, bei dem die Farbdaten jedes Pixels Intensitätswerte von Quellprimärfarben wiedergeben, und der Schritt (b) aufweist, die Farbdaten durch Gewichten jedes Farbintensitätswertes mit einem der jeweiligen Quellprimärfarbe zugeordneten Gewichtungsfaktor in die ersten Leuchtdichtendaten umzuwandeln, und die gewichteten Farbintensitätswerte zu summieren.

**14.** Verfahren nach Anspruch 13, bei dem die Quellprimärfarben rot, grün und blau sind, und das Verhältnis der Gewichtungsfaktoren gleich oder etwa gleich R:G:B = 3:6:1 ist, wobei R für Rot, G für Grün und B für Blau steht.

**15.** Verfahren nach einem der Ansprüche 12 bis 14, bei dem im Schritt (b2.2) das Minimum oder die Minima durch Abtasten der Leuchtdichtenverteilung von entweder der kleinsten oder der höchsten Leuchtdichtenstufe bis zur anderen dieser beiden Leuchtdichtenstufen erfaßt wird und Finden von einer oder mehr Leuchtdichtenstufen, bei denen der Pixelzählwert zuzunehmen beginnt und über eine vorherbestimmte Vielzahl aufeinanderfolgender Leuchtdichtenstufen weiterhin zunimmt, nachdem er über eine vorherbestimmte Vielzahl aufeinanderfolgender Leuchtdichtenstufen abgenommen hatte.

**16.** Verfahren nach einem der Ansprüche 12 bis 15, bei dem der Schritt (b2) ferner aufweist:

(b2.5) Glätten der Leuchtdichtenverteilung, und der Schritt (b2.2) aufweist, das Minimum oder die Minima aus der geglätteten Leuchtdichtenverteilung zu erfassen.

**17.** Verfahren nach einem der Ansprüche 12 bis 16, bei dem die Anzahl der Leuchtdichtenstufen acht ist.

**18.** Verfahren nach einem der Ansprüche 12 bis 17, bei dem die zweite Anzahl Leuchtdichtenstufen N ist und der Schritt (c) aufweist: jeder der N Leuchtdichtenstufen eine jeweilige der N druckbaren Primärfarben zuzuordnen.

**19.** Verfahren nach einem der Ansprüche 12 bis 18, bei dem der Schritt (c) aufweist, auf eine Benutzereingabe durch Spezifizieren oder Ändern der Zuordnung einer druckbaren Primärfarbe zu jedem Pixel aufgrund der von den zweiten Leuchtdichtendaten des Pixels wiedergegebenen Leuchtdichtenstufe zu reagieren.

**20.** Verfahren nach einem der Ansprüche 12 bis 19, angewendet auf die Bilddatenverarbeitung zum Ausdrucken auf ein Druckmedium mittels eines Druckers (94), bei dem die druckbaren Primärfarben für Materialfarben bestimmt sind, die zum Drucken im Drucker vorgesehen sind, wobei die Materialfarben Farben von Tinte oder wärmeempfindlichen Farbstoffen umfassen und die Farbe des Druckmediums selbst.

**21.** Verfahren nach Anspruch 20, bei dem die druckbaren Farben Halbtöne umfassen, die durch Kombinieren der Materialfarben geschaffen werden können.

**22.** Anwendung des Verfahrens gemäß einem der Ansprüche 12 bis 21 zum Generieren von Logodaten, die ausgebildet sind, in einem mit einer POS-Kasse verbundenen POS-Drucker gespeichert zu werden.

**23.** Maschinenlesbares Medium, welches ein Programm mit Befehlen trägt, die von der Maschine ausführbar sind, um ein Verfahren nach einem der Ansprüche 12 bis 21 auszuführen.

**24.** Rechnerprogramm, zusammengesetzt aus Befehlen, die mittels einer Maschine ausführbar sind, um ein Verfahren nach einem der Ansprüche 12 bis 22 auszuführen.

**Revendications**

**1.** Système pour traiter des données d'image à afficher ou à imprimer au moyen d'un dispositif (94) de sortie, comprenant :

une unité (11) de capture de données source pour obtenir des données source contenant une représentation d'une image, d'un graphique et/ou d'un texte en plusieurs couleurs ;
un convertisseur (15) de données comprenant un calculateur (17) de luminance pour convertir les données de couleur de chaque pixel en premières données de luminance représentant l'un d'un premier nombre de niveaux de luminance, et un processeur (18) de niveaux de gris pour convertir en outre, les premières données de luminance de chaque pixel en deuxièmes données de luminance représentant l'un d'un deuxième nombre de niveaux de luminance, le deuxième nombre étant inférieur au premier nombre ; et
une unité (13) d'attribution de couleurs pour attribuer l'une de N couleurs primaires imprimables qui sont disponibles dans le dispositif (94) de sortie, à chaque pixel, en fonction du niveau de luminance représenté par les deuxièmes données de luminance du pixel, N étant supérieur ou égal à 3 ;

**caractérisé en ce que** le processeur (18) de niveaux de gris comprend :

un calculateur (31 à 34) de répartition pour calculer une répartition de luminance, en comptant pour chaque niveau de luminance du premier nombre, le nombre de pixels dont les données de luminance correspondantes représentent ce niveau de luminance, et pour détecter un ou plusieurs niveau(x) de luminance qui représente (nt) un/des minimum/minima de comptes de pixels locaux dans la répartition de luminance ; et
un moyen (35) de sélection de valeurs de seuil, destiné à régler des valeurs de seuil, sur la base du minimum ou des minima ;

dans lequel le processeur (18) de niveaux de gris est conçu pour ramener le premier nombre de niveaux de luminance au deuxième nombre, sur la base des valeurs de seuil.

2. Système suivant la revendication 1, dans lequel les données de couleur de chaque pixel représentent des valeurs d'intensité de couleurs primaires source, et le convertisseur (15) de données est conçu pour convertir les données de couleur en les premières données de luminance, en pondérant chaque valeur d'intensité de couleur à l'aide d'un facteur de pondération attribué à la couleur primaire source respective, et en sommant les valeurs d'intensité de couleurs pondérées.

3. Système suivant la revendication 2, dans lequel les couleurs primaires source sont le rouge, le vert et le bleu et le rapport des facteurs de pondération est égal ou sensiblement égal à R:V:B = 3:6:1, où R représente le rouge, V représente le vert et B représente le bleu.

4. Système suivant l'une quelconque des revendications précédentes, dans lequel le calculateur (31 à 34) de répartition est conçu pour lisser la répartition de luminance et pour détecter le minimum ou les minima à partir de la répartition de luminance lissée.

5. Système suivant l'une quelconque des revendications précédentes, dans lequel le calculateur (31 à 34) de répartition est conçu pour détecter le minimum ou les minima en balayant la répartition de luminance, du niveau le plus faible ou du niveau le plus élevé de luminance, à l'autre de ces deux niveaux de luminance, et en trouvant un ou plusieurs niveau(x) de luminance au (x) quel (s) la valeur de compte de pixels commence à s'accroître et reste croissante pendant une pluralité déterminée à l'avance de niveaux de luminance consécutifs, après qu'elle a diminué pendant une pluralité déterminée à l'avance de niveaux de luminance consécutifs.

6. Système suivant l'une quelconque des revendications 1 à 5, dans lequel le deuxième nombre de niveaux de luminance est égal à 8.

7. Système suivant l'une quelconque des revendications 1 à 5, dans lequel le deuxième nombre de niveaux de luminance est N et l'unité (12) d'attribution de couleurs est conçue pour attribuer à chacun des N niveaux de luminance, une respective des N couleurs primaires imprimables.

8. Système suivant l'une quelconque des revendications précédentes, dans lequel l'unité (12) d'attribution de couleurs comprend un moyen (42) de sélection d'attribution de couleurs, répondant à une entrée d'utilisateur, en spécifiant ou en modifiant l'attribution d'une couleur primaire imprimable à chaque pixel, sur la base du niveau de luminance représenté par les deuxièmes données de luminance du pixel.

9. Système suivant l'une quelconque des revendications 1 à 8, dans lequel le dispositif (94) de sortie est une imprimante pour imprimer un support d'impression, et les couleurs primaires imprimables sont définies par des couleurs matérielles prévues dans l'imprimante pour l'impression, les couleurs matérielles comprenant des couleurs d'encre ou de colorants sensibles à la chaleur, et la couleur d'un support d'impression lui-même.

10. Système suivant la revendication 9, dans lequel les couleurs imprimables comprennent des demi-teintes qui peuvent être créées par combinaison des couleurs matérielles.

11. Utilisation du système suivant l'une quelconque des revendications 1 à 10, pour engendrer des données de logotype propres à être mémorisées dans une imprimante de point de vente, en tant que dispositif (94) de sortie connecté à un terminal de point de vente.

12. Procédé pour traiter des données d'image à afficher ou à imprimer au moyen d'un dispositif (94) de sortie, comprenant les étapes comportant le fait de :

(a) obtenir et mémoriser des données source contenant une représentation d'une image, d'un graphique et/ou d'un texte en plusieurs couleurs ;

(b) convertir des données de couleur de chaque pixel dans les données source, en données de luminance du pixel respectif, l'étape (b) comprenant :

(b1) le fait de convertir les données de couleur de chaque pixel en premières données de luminance représentant l'un d'un premier nombre de niveaux de luminance, et

(b2) le fait de convertir en outre, les premières données de luminance de chaque pixel en deuxièmes données de luminance représentant l'un d'un deuxième nombre de niveaux de luminance, le deuxième nombre étant inférieur au premier nombre ;

(c) attribuer l'une de N couleurs primaires imprimables qui sont disponibles dans le dispositif (94) de sortie, à chaque pixel, en fonction du niveau de luminance représenté par les deuxièmes données de luminance du pixel, N étant supérieur ou égal à 3 ;

**caractérisé en ce que** l'étape (b2) comprend en outre :

(b2.1) le fait de calculer une répartition de luminance, en comptant pour chaque niveau de luminance du premier nombre, le nombre de pixels dont les données de luminance correspondantes représentent ce niveau de luminance ;

(b2.2) le fait de détecter un ou plusieurs niveau(x) de luminance qui représente(nt) un/des minimum/minima de compte de pixels locaux dans la répartition de luminance ;

(b2.3) le fait de régler des valeurs de seuil sur la base du minimum ou des minima ; et

(b2.4) le fait de ramener le premier nombre de niveaux de luminance au deuxième nombre, sur la base des valeurs de seuil.

13. Procédé suivant la revendication 12, dans lequel les données de couleur de chaque pixel représentent des valeurs d'intensité de couleurs primaires source, et l'étape (b) comprend le fait de convertir les données de couleurs en premières données de luminance, en pondérant chaque valeur d'intensité de couleur à l'aide d'un facteur de pondération attribué à la couleur primaire source respective, et en sommant les valeurs d'intensité de couleurs pondérées.

14. Procédé suivant la revendication 13, dans lequel les couleurs primaires source sont le rouge, le vert et le bleu et le rapport des facteurs de pondération est égal ou sensiblement égal à R:V:B = 3:6:1, où R représente le rouge, V représente le vert et B représente le bleu.

15. Procédé suivant l'une quelconque des revendications 12 à 14, dans lequel l'étape (b2.2) détecte le minimum ou les minima, en balayant la répartition de luminance, du niveau le plus faible ou du niveau le plus élevé de luminance, à l'autre de ces deux niveaux de luminance, et en trouvant un ou plusieurs niveau(x) de luminance au(x)quel(s) la valeur de compte de pixels commence à s'accroître et reste croissante pendant une pluralité déterminée à l'avance de niveaux de luminance consécutifs, après qu'elle a diminué pendant une pluralité déterminée à l'avance de niveaux de luminance consécutifs.

16. Procédé suivant l'une quelconque des revendications 12 à 15, dans lequel l'étape (b2) comprend en outre :

(b2.5) le fait de lisser la répartition de luminance, et l'étape (b2.2) comprend le fait de détecter le minimum ou les minima à partir de la répartition de luminance lissée.

17. Procédé suivant l'une quelconque des revendications 12 à 16, dans lequel le deuxième nombre de niveaux de luminance est égal à 8.

18. Procédé suivant l'une quelconque des revendications 12 à 17, dans lequel le deuxième nombre de niveaux de luminance est N, et l'étape (c) comprend le fait d'attribuer à chacun des N niveaux de luminance, l'une respective des N couleurs primaires imprimables.

19. Procédé suivant l'une quelconque des revendications 12 à 18, dans lequel l'étape (c) comprend le fait de répondre à une entrée d'utilisateur en spécifiant ou en modifiant l'attribution d'une couleur primaire imprimable à chaque pixel, en fonction du niveau de luminance représenté par les deuxièmes données de luminance du pixel.

20. Procédé suivant l'une quelconque des revendications 12 à 19, appliqué au traitement de données d'image à imprimer sur un support d'impression au moyen d'une imprimante (94), dans lequel les couleurs primaires imprimables sont définies par des couleurs matérielles prévues dans l'imprimante pour l'impression, les couleurs matérielles comprenant des couleurs d'encre ou de colorants sensibles à la chaleur, et la couleur du support d'impression lui-même.

21. Procédé suivant la revendication 20, dans lequel les couleurs imprimables comprennent des demi-teintes qui peuvent être créées par combinaison des couleurs matérielles.

22. Utilisation du procédé suivant l'une quelconque des revendications 12 à 21, pour engendrer des données de logotype propres à être mémorisées dans une imprimante de point de vente connectée à un terminal de point de vente.

23. Support pouvant être lu par une machine, le support servant de support à un programme d'instructions pouvant être exécutées par la machine, pour mettre en oeuvre un procédé suivant l'une quelconque des revendications 12 à 21.

24. Programme informatique composé d'instructions pouvant être exécutées par une machine pour mettre en oeuvre un procédé suivant l'une quelconque des revendications 12 à 22.

FIG. 1

EP 1 223 745 B1

|  | R | G | B | $Yc_{256}$ | $Yc_8$ |
|---|---|---|---|---|---|
| W (WHITE) | 255 | 255 | 255 | 255 | 7 |
| Y (YELLOW) | 255 | 255 | 0 | 225 | 7 |
| C (CYAN) | 0 | 255 | 255 | 178 | 5 |
| G (GREEN) | 0 | 255 | 0 | 149 | 4 |
| M (MAGENTA) | 255 | 0 | 255 | 105 | 3 |
| R (RED) | 255 | 0 | 0 | 76 | 2 |
| B (BLUE) | 0 | 0 | 255 | 29 | 0 |
| K (BLACK) | 0 | 0 | 0 | 0 | 0 |

# FIG. 2

FIG. 3

FROM 17

18

PIXEL COUNTER 31

DISTRIBUTION CURVE SMOOTHING PROCESSOR 33

DISTRIBUTION DATA MEMORY 32

LOCAL MINIMUM CALCULATOR 34

LUMINANCE DATA CONVERTER 36

TO 22

THRESHOLD VALUE SELECTOR 35

FROM 12

EP 1 223 745 B1

25

FIG. 4

FIG. 5

FIG. 6

(a)

(b)

FIG. 7

```
         ( CREATE PRINT IMAGE )
                   |
                   v
         +---------------------+
         | CONVERT FULL-COLOR  |
         |     IMAGE TO        |----- S100
         |  GRAY SCALE IMAGE   |
         +---------------------+
                   |
                   v
         +---------------------+
         |     LUMINANCE       |
         |       LEVEL         |----- S200
         |     REDUCTION       |
         +---------------------+
                   |
                   v
         +---------------------+
         |  COLOR ASSIGNMENT   |----- S300
         +---------------------+
                   |
                   v
         (       RETURN        )
```

# FIG. 8

FIG. 9

31

S200

CONVERSION
TO 8 LUMINANCE
LEVELS

S201

SET
THRESHOLD
VALUES
AUTOMATICALLY
?

NO

YES

S209

THRESHOLD
VALUES INPUT
?

NO

YES

S202

SEARCH
FOR THRESHOLD
VALUES?

NO

YES

S203

COUNT PIXELS IN
EACH LUMINANCE LEVEL

S207

SET THRESHOLD
VALUES AT POINTS
DIVIDING LUMINANCE
RANGE INTO
8 EQUAL GROUPS

CONVERT
LUMINANCE DATA
BASED ON SPECIFIED
THRESHOLD VALUES

S210

S204

DETECT
MINIMUMS IN
DISTRIBUTION

CONVERT LUMINANCE
DATA BASED ON
THRESHOLD VALUES

S208

S205

SET THRESHOLD VALUES
BASED ON DETECTED
MINIMUMS

S206

CONVERT LUMINANCE
DATA BASED ON THRESHOLD
VALUES

RETURN

FIG. 10

```
        ┌─────────────────────────┐
        │  DETECT LOCAL MINIMUMS  │──────────  S204
        └─────────────────────────┘
                    │
                    ▼
        ┌─────────────────────────┐
        │   SMOOTH DISTRIBUTION   │──────────  S241
        │         CURVE           │
        └─────────────────────────┘
                    │
                    ▼
        ┌─────────────────────────┐
        │   DETECT POINT WHERE    │
        │   PIXEL COUNT STARTS    │
        │   INCREASING AFTER      │──────────  S242
        │   DECREASING            │
        │   CONTINUOUSLY FOR A    │
        │   SPECIFIED NUMBER      │
        │      OF TIMES           │
        └─────────────────────────┘
                    │
                    ▼
              PIXEL
        COUNT INCREASES                  S243
  NO   A SPECIFIED NUMBER
           OF TIMES
              ?
                   │ YES
                   ▼
        ┌─────────────────────────┐
        │   STORE LUMINANCE       │
        │   LEVEL OF DETECTED     │──────────  S244
        │   TRANSITION POINT      │
        └─────────────────────────┘
                    │
                    ▼
              DETECTION                  S245
  NO     COMPLETED FOR
          ENTIRE CURVE
              ?
                   │ YES
                   ▼
           ┌──────────────┐
           │    RETURN    │
           └──────────────┘
```

# FIG. 11

33

S300

COLOR ASSIGNMENT

S301

COLOR ASSIGNMENTS INPUT?

YES

NO

DETERMINE ASSIGNABLE COLOR COUNT (N) — S302

CONVERT LUMINANCE DATA TO N LEVELS (CALCULATE THRESHOLD VALUES FOR N LEVEL CONVERSION) — S303

ASSIGN PRINTABLE COLORS TO PIXELS ACCORDING TO LUMINANCE DATA

ASSIGN SPECIFIED COLORS TO PIXELS ACCORDING TO ASSIGNMENT INPUT

S304

S305

RETURN

# FIG. 12

```
        ( 3-VALUE CONVERSION )              S303
                   |
                   v
        +----------------------+
        |      CALCULATE       |            S331
        |   REFERENCE VALUE    |
        +----------------------+
                   |
                   v
        +----------------------+
        |    CALCULATE TV1 =   |            S332
        | REFERENCE VALUE * 2/3|
        +----------------------+
                   |
                   v
        +----------------------+
        |    CALCULATE TV2 =   |            S334
        |   REFERENCE VALUE +  |
        | (7-REFERENCE VALUE) * 1/3 |
        +----------------------+
                   |
                   v
        +----------------------+
        |  CONVERT LUMINANCE   |            S335
        |   DATA TO 3 LEVELS   |
        |  BASED ON TV1, TV2   |
        +----------------------+
                   |
                   v
            ( RETURN )
```

# FIG. 13

(a)

(b)

(c)

(d)

(e)

FIG. 14

(a)

(b)

(c)

(d)

(e)

(f)

FIG. 15

FIG. 16

Color LOGO Tool Version 1.00

SOURCE FILE  D:\temp\Patent Image\Image5.jpg      SHOW (B)

**PRINTER DATA**
NAME        TM-J2000/2100
PAPER WIDTH  82.5mm
COLOR 1  ☐ BLACK
COLOR 2  ☐ GREEN
RESOLUTION  180x180dpl

**COMMUNICATION PARAMETERS**
PORT     LPT1

☑ MATCHES TO THE WIDTH OF THE FORM

| ADJUST LUMINANCE LEVEL | |
|---|---|
| NEW (N) | OUTPUT TO FILE (F) |
| EDIT (E) | SAVE TO PRINTER (R) |
| PREVIEW (P) | MANAGE PRINTER FILES (M) |
| TEST PRINT (T) | QUIT |

**PROPERTIES**
SINGLE COLOR  ☐ BLACK
COLOR REDUCTION
COARSE ▭————— DENSE

**LEVEL CORRECTION**
R
G
B

**COLOR ASSIGNMENT (BY LUMINANCE LEVEL)**
○ AUTOMATIC ● MANUAL
COLOR 1  COLOR 2  WHITE

| | COLOR 1 | COLOR 2 | WHITE |
|---|---|---|---|
| (LOW) 1 | | | |
| 2 | | | |
| 3 | | | |
| 4 | | | |
| 5 | | | |
| 6 | | | |
| 7 | | | |
| (HIGH) 8 | | | |

EP 1 223 745 B1

| DITHERED | A | A1 |
| ERROR DIFFUSION | B | B1 |
| METHOD OF THE INVENTION | C | C1 |
| | | C2 |

(a)

(b)

FIG. 17

(a)

(b)

FIG. 18

APPLICATION — 90

CONTROL OBJECT (CO) — 91

SERVICE OBJECT (SO) — 92

OPERATING SYSTEM
(WINDOWS) — 93

DEVICE (POS PRINTER) — 94

# FIG. 19

84

82

85

86

87

83

88

Device Specific Settings ⊠

| General | Paper | Bitmap | Color Bitmap | Status Log |

┌─HALFTONE────────────┐
COLOR REDUCTION
METHOD

| LUMINANCE LEVEL REDUCTION | ▼ |

LUMINANCE

BRIGHT        DARK

┌─COLORS──────────┐
COLOR 1

| BLACK | ▼ |

COLOR 2

| BLACK | ▼ |

| OK | CANCEL | APPLY (A) |

# FIG. 20